# EUROPÄISCHE PATENTSCHRIFT

(11) **EP 2 256 457 B1**
(45) Veröffentlichungstag und Bekanntmachung des Hinweises auf die Patenterteilung: **17.05.2017**
(21) Anmeldenummer: 10005169.7
(22) Anmeldetag: 18.05.2010
(51) Int. Cl.: G01C 7/06, E21D 9/00

(54) **Messung unterirdischer Bauwerke, insbesondere beim unterirdischen Vortrieb, mit Konsolen**
Measurement of underground structures, in particular for underground tunnelling, with consoles
Mesure de constructions souterraines, notamment lors de l'avancée souterraine, à l'aide de consoles

(30) Priorität: 09.01.2010 DE 102010004231; 09.01.2010 DE 102010004264; 26.05.2009 DE 102009022750
(43) Veröffentlichungstag der Anmeldung: 01.12.2010
(73) Patentinhaber: Emschergenossenschaft, 45128 Essen (DE)
(72) Erfinder: Kemper-Böninghausen, Rolf, 45359 Essen (DE)
(74) Vertreter: Kaewert, Klaus

(56) Entgegenhaltungen:
- DE-A1- 3 306 470
- DE-A1- 3 404 495
- DE-C1- 4 017 833
- JP-A- H08 189 827
- JP-A- H08 233 575

## Beschreibung

Die Erfindung betrifft die Messung unterirdischer Bauwerke, insbesondere
beim unterirdischen Vortrieb. Beim unterirdischen Vortrieb ist die Vermessung unerlässlich. Aber auch nach Fertigstellung eines unterirdischen Bauwerkes sind Vermessungen notwendig, um zum Beispiel eine Bauwerkssetzung zu ermitteln.
Unterirdischer Vortrieb kommt vor im Bergbau, im Kanalbau, im Tunnelvortrieb, im Rohrvortrieb, bei Unterführungen.
Für den unterirdischen Vortrieb stehen verschiedene Verfahren zur Verfügung.
Schon der Bergbau kennt verschiedene Vortriebsverfahren.
Dazu gehören zum Beispiel der Sprengvortrieb, der Schildvortrieb, der Messervortrieb und der Pressvortrieb. Bei jedem der Verfahren muss der Vortrieb eingemessen werden.
Dabei wird das Bauwerk vorzugsweise in jeder Richtung eingemessen/vermessen.
Im unterirdischen Kanalbau kommen zum Teil besondere Verfahren zum Einsatz, desgleichen für den Rohrvortrieb.

In einer Variante wird mittels einer Rohrpresse von einer Startgrube ausgehend ein Schneidrohr/Schneidschuh durch den Untergrund getrieben. Nach jedem Pressenhub wird die Presse in die Ausgangsstellung zurückgefahren, so dass
ein zweites Rohrstück in der Startgrube vor der Presse positioniert werden
kann und eine erneute Pressenbetätigung den Vortrieb des Rohrstückes
bewirkt und das zweite Rohrstück das Schneidrohr voranschiebt.
Der Vorgang wiederholt sich mit dem dritten Rohrstück wie auch mit jedem weiteren Rohrstück.

In einer anderen Variante wird vor dem sich bildenden Kanal Erdreich abgebaut und werden in dem entstehenden Hohlraum Tübbinge montiert.
In beiden Varianten des Kanalbaus ist eine Einmessung/Vermessung des Vortriebs und der Rohre erforderlich. Beim Nachmessen wird die Abweichung des Kanalverlaufes von der durch die Planung vorbestimmten
Lage und Höhe gemessen bzw. wird die Abweichung des Kanals von einem Dokumentationsstand des Kanals gemessen, dessen Beibehaltung gewünscht
ist.
Beim Einmessen wird die gewünschte Planungslage des Kanals auf die Vortriebswerkzeuge für den Kanalbau übertragen.
Der Tunnelvortrieb ist dem Vortrieb im Bergbau am ähnlichsten, auch wenn
die Tunnelquerschnitte anders sind als die Streckenquerschnitte im Bergbau.
Im Tunnelvortrieb kommen die gleichen Verfahren zur Anwendung wie im
Bergbau. Dementsprechend kommt auch hier eine Einmessung und Nachmessung wie beim Bergbau vor.
Der Rohrvortrieb ist in einigen Bereichen, insbesondere bei grösseren Abmessungen dem Tunnelvortrieb sehr ähnlich. Dementsprechend kommen
beim Rohrvortrieb auch Vortriebsverfahren wie beim Tunnelvortrieb oder
auch wie beim Kanalbau vor.
Unterführungen können je nach Abmessungen tunnelähnlich sein. Dementsprechend kommen dann auch Messungen wie beim Tunnelbau vor.
Im Übrigen machen Erdbewegungen immer wieder eine Nachvermessung an unterirdischen Bauwerken notwendig.
Beim Vermessen des unterirdischen Bauwerks, insbesondere beim unterirdischen Vortrieb, gibt es verschiedene Verfahren.

Herkömmlich findet eine geodätische Vermessung mit Tachymeter statt, die von Hand auf dem Bauwerksboden bzw. Kanalboden aufgestellt werden. Dabei kommen Stative zur Anwendung, die mit einer Höhenverstellung versehen sind.
Das Tachymeter ist ein Gerät, mit dem man Horizontalrichtungen, Vertikalwinkel und auch Schrägstrecken ermitteln kann. Mit ihm lassen sich Vermessungen schnell und mit grosser Genauigkeit durchführen.

>Die elektronischen Tachymeter messen die Richtungen nach dem Zielvorgang selbsttätig. Zugleich werden elektronische Distanzmessungen durchgeführt. Dabei wird entweder nur die Laufzeit oder bei präziseren Tachymetern Laufzeit und Phasenverschiebung eines ausgesandten und im Zielpunkt reflektierten Lichtstrahls gemessen. Üblicherweise liegt das Licht der Trägerwelle im infraroten Bereich oder nahe dem infraroten Bereich. Die Reflexion des Lichtstrahls erfolgt üblicherweise in einem Prisma, vorzugsweise in einem retroreflektierenden Tripel-Prisma oder Tripelspiegel.
Die Messwerte (Richtung und Distanz werden bei den zeitgemässen elektronischen Tachymetern vollautomatisch elektronisch bestimmt. Das kann über kombinierte/angeschlossene Rechner erfolgen. Je nach vorhandenen Programmen kann mit dem elektronischen Tachymeter eine zweidimensionale oder dreidimensionale Abbildung von Bauwerken stattfinden.
Neueste motorisierte Tachymeter sind mit einer Verstellmechanik und einer Antriebsmechanik versehen, welche das automatische Anvisieren des Tripelprismas/spiegels und eine Zielverfolgung erlaubt. Ausserdem sind diese Tachymeter programmierbar, so dass sie in genauer Folge vollautomatisch mehrere Punkte vermessen können.
Ein Tripelprisma ist ein Glaskörper, der vorn plan ist und rückseitig drei zueinander in einem Winkel von 90Grad stehende unverspiegelte Flächen besitzt. Es reflektiert das Licht wie ein Spiegel, aber sehr viel verlustärmer. Die DE 33 06 470 A1 offenbart eine Tunnelvermessung mit drei hintereinander angeordneten Meßwerkzeugen auf Konsolen, die mit dem Vortriebsschild einer Tunnelbohrmaschine in einander überlappenden Meßschritten bewegt werden.

In der DE 10 2007 014 727 wird darauf hingewiesen, dass in einem Tunnel nur sehr beengte Verhältnisse für eine Aufstellung der Messvorrichtung gegeben sind. Dabei wird in dieser Druckschrift von einem Stand der Technik mit ortsfesten Konsolen ausgegangen. Dies soll eine aufwendige Verschraubung und den Einsatz geeigneter Werkzeuge erforderlich machen.
In dieser Druckschrift wird als Alternative zu dem ortsfesten Einbau von Konsolen vorgeschlagen, das Stativ bei einem Tübbingausbau in die Fugen zwischen zwei benachbarten Tübbingen einzuklemmen. Die Klemmkraft soll gegebenenfalls mit Schrauben/Federkraft/Hebeln verstärkt verstärkt werden.

Die Klemmung ist nur dort möglich, wo Fugen mit ausreichender Breite bestehen, die in der Lage sind, die Klemm-Mechanik aufzunehmen. Das ist nicht nur für die Fugendichtung von gravierendem Nachteil. Die Klemmung hat noch diverse andere Nachteile.

Die EP1408344 beschreibt ein Verfahren zur geodätischen Messung, bei dem die Tunnelwandung mit Laserscannern vermessen wird. Zugleich wird der Abstand des Laserscanners vom bestimmten Messpunkten gemessen. Daraus
ergibt sich die Position des Laserscanners. Die Messwerte werden dann mit
einem Rechner ausgewertet.
Nachteilig an dem Verfahren wird angesehen, dass der Laserscanner nur
einen verhältnismässig kleinen Messbereich hat. Deshalb ist eine Vielzahl von Messungen erforderlich. Dieser Nachteil wirkt sich umso stärker aus, je länger die Strecke ist.

Die DE102005012107 entwickelt die geodätische Messung nach der
EP 1408344 weiter. Dabei werden diverse, Positionspunkte des Lasers gemessen und als Fixpunkte festgelegt.

Die DE3733553 beschreibt ein lasergesteuertes Vortriebsschild. Zur Positionsbestimmung des Schildvortriebes dient ein elektrischer Reflektor,
der Signale aussendet. Alle Werte werden zur Maschinensteuerung in einem Rechner verarbeitet.

Die DE 102004010114 beschreibt ein Messverfahren zur Steuerung von Vortriebsmaschinen. Dabei wird eine besondere Schwierigkeit bei der Kurvenpressung von Rohren gesehen, weil keine optische Gasse durch die Kurve besteht. Um gleichwohl eine Lasermessung durchzuführen, ist eine Messung nach Art eines Polygonzuges vorgesehen. Der Laser soll mit einer Zieltafel zusammen wirken. Dabei bildet der Laserstrahl die Sollposition der Vortriebsmaschine. Es wird die Zieltafel an der Vortriebsmaschine befestigt und die Vortriebsmaschine so bewegt, dass der Laserstrahl in dem Zielfeld der Zieltafel auftrifft. Dann hat die Vortriebsmaschine ihre Sollposition erreicht.

Eine ähnliche Lösung schlägt die DE4017833 vor. Dabei finden für die Vermessung Theodolite Anwendung. *Die Offenbarung der* DE4017833 *geht nicht über die Offenbarung der* DE3306470 *hinaus*

*Die* DE3306470 *zeigt ein drei Jahrzehnte altes Messverfahren für*
*den Rohrvortrieb mit mehreren*
*Messelementen. Die verschiedenen Messelemente werden als Messzug bezeichnet, der von einer Messung zur nächsten Messung vorgezogen wird. Das Vorziehen des gesamten Messzuges versteht der Fachmann als Verstellung aller Messwerkzeuge von einem Messschritt zum nächsten. Dadurch fehlt eine sichere Verknüpfung der Messdaten eines Messschrittes mit den Daten des nächsten Messschrittes.*

*Verstellbare Messgeräte sind in der* DE3404495 *offenbart. Diese Verstellung dient aber erkennbar dazu, die Messgeräte auf die Messpunkte auszurichten. Die Verstellung dient nicht dazu, mit den verstellten Messgeräten einen weiteren Messschritt durchzuführen.*

Die DE3120010 beschreibt ein Vermessungssystem für einen vorgepressten, gekrümmt verlaufenden Rohrstrang.
Vorn an dem Rohrstrang befindet sich ein Schneidschuh bzw. Schneidrohr.
Zur Steuerung des Schneidschuhes werden dabei Lichtstrahlen und Fadenkreuze sowie Laser und Empfänger und Abtastvorrichtungen als Stand der Technik erwähnt.

Nach der DE3120010 soll bei gekrümmtem Rohrverlauf ein Polygonzug ausgemessen werden. Innerhalb des Polygonzuges werden die Messpunkte und Abtastsysteme in einem fest vorgegebenen Abstand angeordnet.
Während des Vorpressens bleiben die Abstände der Messpunkte konstant. Dieser Verfahrensvorschlag bevorzugt Leuchtdioden als Messpunkte und eine Ultraschallmessung.

Die DE69103610 beschreibt auch ein Lasersystem mit Referenzpunkten.
Diese Druckschrift geht von der sogenannten "NATM"Tunnelvortriebsmethode aus. Die Vortriebsmethode betrifft den
Sprengvortrieb. Beim Sprengvortrieb werden diverse Bohrungen in das Gebirge eingebracht, mit Sprengstoff gefüllt und verdämmt.
Damit durch die Sprengung ein vorbestimmter Gebirgsausbruch entsteht, sollen die Bohrungen mit Hilfe von Lasern vermessen und markiert werden. Der Laser wird von Hand bewegt, auch wenn ein Computer bei der Einstellung hilft. Die Markierungen werden von Hand aufgebracht.

Ausserdem wird eine Automatisierung bei der Vermessung vorgeschlagen. Dabei ist ein geodätisches Lasersystem vorgesehen. Zu dem System sollen gehören: eine Lasermesseinheit zur Durchführung der Abstands- und Winkelmessungen, ein Laserprojektor zum Lenken des Laserstrahls auf einen Abbaustoss, eine Steuereinheit zum Festlegen der Messpunkte auf der Grundlage der geodätischen Daten. Dabei soll die Lasermesseinheit unabhängig vom Laserprojektor arbeiten.

Die DE 2607280 beschreibt ein Lasermessgerät bei dem Lichtstrahlen mit
Hilfe eines Prismas zerlegt und umgelenkt werden.

Die DE60734622 beschreibt gleichfalls Lasermessgeräte für Tunnelvortriebe.
Die Laservorrichtung ist mit einer Kollimationseinrichtung zusammen.
Solche Einrichtung ist bei Lasern üblich, um den Laserstrahl zu bündeln.
Darüber hinaus ist in dieser Druckschrift die Verwendung eines Prismas vorgesehen.

Neueste Lasertracker sind hoch präzise Messinstrumente, die durch eine Kombination aus Winkel- und Distanzmessung die 3D-Punktkoordinaten eines Objektes erfassen. Die Distanzmessung erfolgt durch Laserinterferometer oder durch absolute Distanzmessung oder durch eine Kombination aus beidem.

Mit dem Laserscanner kann ein Laserstrahl erzeugt werden, der mit einem rotierenden Spiegel auf die zu scannende Oberfläche projiziert wird. Aufgrund des Rotationsspiegels werden eine Unmenge von Messpunkten/Punktwolke erzeugt. Der Laserstrahl wird von der zu messenden Oberfläche reflektiert und trifft in Abhängigkeit der Entfernung zur Oberfläche des Objektes in unterschiedlichen Distanzen auf einen CCD-Chip auf. Die Distanzen zwischen dem Laser und den Punkten auf der Oberfläche des Objektes werden mittels Triangulationsverfahren bestimmt. Bestimmte Konturen des Objektes bilden sich als unterschiedliche Distanzen ab. Diese Daten können für eine anschliessende CAD-Datenerstellung genutzt werden.

### Aufgabe der Erfindung

Die Erfindung hat sich die Aufgabe gestellt, ein wirtschaftlicheres Vermessungssystem für unterirdische Bauwerke zu schaffen.

### Lösung der Aufgabe

Die Erfindung wählt von den diversen bekannten Verfahren ein Verfahren als Ausgangspunkt der Entwicklung aus, bei dem in dem unterirdischen Bauwerk feste Messpunkte angelegt werden. Dies erscheint im Verhältnis zu den Verfahren, bei dem nur gescannt und mit Computern
gerechnet wird, an sich nicht zeitgemäss. Das heisst, die Erfindung hält an den überholt erscheinenden festen Messpunkten fest. Allerdings geht die Erfindung in diesem Punkt über den Stand der Technik hinaus, indem verstellbare und/oder montierbare und demontierbare Messpunkte geschaffen werden.

Wahlweise finden verstellbare, bleibende Konsolen Anwendung, auf
denen die Messeinrichtungen lösbar montiert werden.
Wahlweise werden die Konsolen nach der Fertigstellung des Bauwerkes entfernt.

Zu den Messeinrichtungen gehören zum Beispiel die oben beschriebenen Einrichtungen einschliesslich Messpunkten, insbesondere aber auch Tachymeter und Prismen sowie Kreisel-Messinstrumente für eine geodätische Entfernungsmessung und Positionsbestimmung.

Durch Verstellung sollen die Konsolen aus der Messstellung im Bauwerkhohlraum an die Innenwand des Bauwerkes bewegt werden, um
möglichst viel von dem Bauwerkshohlraum für die bestimmungsgemässe
andere Nutzung des Bauwerkes freizugeben. Dieser Raum kann genutzt werden, um die für den Baufortschritt erforderlichen Materialtransporte und Personentransporte durchzuführen. Das schafft ausserdem Platz, um ein Fahrzeug in dem Bauwerkshohlraum zu bewegen, dass durch die Bewegungen des erfindungsgemässen Fahrzeugs genug Platz vorhanden ist. Besonders dem Arbeitsschutz wird durch die Verstellbarkeit der Konsolen Rechnung getragen.

Für eine Messung sollen die Konsolen wieder in die Messstellung bewegt
werden.

Die Verstellung kann durch Auseinanderziehen und Ineinanderschieben der
Konsole erreicht werden. Desgleichen kann die Verstellung durch Ausklappen/Einklappen oder Ausschwenken/Einschwenken erreicht werden.

Dann wird die Verstellbarkeit durch Schwenkbarkeit der Konsole erreicht.
Das heisst, die Konsole ist in dem Fall als Schwenkarm ausgebildet und wird bei Bedarf vorgeschwenkt/ausgeschwenkt oder zurückgeschwenkt/eingeschwenkt.

In der Messstellung ist eine Arretierung der verstellbaren Konsole vorgesehen. In der anderen Endstellung ist eine Arretierung von Vorteil. Es kann zur Arretierung in der Messstellung eine Klemmung oder eine lösbare Raste verwendet werden.

Zur Arretierung durch Klemmung eignet sich eine Schraube, mit der das bewegliche Teil der Konsole gegen das fest stehende Teil der Konsole gespannt wird. Die Schraube kann durch einen Bewegungsschlitz des beweglichen Konsolenteiles in ein Gewindeloch des festen Konsolenteiles greifen.
Vorzugsweise endet die Schraube nicht in einem Schraubenkopf, für den ein bestimmtes Werkzeug erforderlich ist, sondern in einem Hebel, der ohne zusätzliches Werkzeug von Hand betätigt werden kann.
Umgekehrt kann der Bewegungsschlitz auch in dem festen Teil der Konsole und das Gewindeloch in dem beweglichen Teil der Konsole angeordnet sein. Wahlweise ist auch kein Gewindeloch, sondern nur ein Durchgangsloch vorgesehen. Dann kann die Schraube mit einer Schraubenmutter zusammenwirken, mit der die Schraube das korrespondierende Konsolenteil (das sonst mit dem Gewindeloch versehen ist) hintergreift. Diese Schraubenmutter kann wiederum als Hebel ausgebildet werden, damit die Schraubenmutter von Hand gehalten oder bewegt werden kann.
Die Schraube kann auch als Ankerschraube ausgebildet sein, um ein Konsolenteil zu hintergreifen.
Die Schraube kann auch die beiden miteinander zu klemmenden Konsolenteile vollständig durchdringen, so dass an jedem Ende Hebel für die Handbetätigung angeordnet werden können.

Je nach Beschaffenheit der Konsole kann auch eine mehrfache Verspannung von Vorteil sein. Das kann der Fall sein, wenn das bewegliche Teil der Konsole mit grobem Spiel auf dem festen Teil der Konsole geführt ist.
Ein grobes Bewegungsspiel kann aus Gründen der Herstellung oder aus Gründen einer Schmutzbelastung der Konsole zweckmässig sein.
Eine wahlweise vorgesehene Raste erlaubt eine schnelle und genaue Handhabung. Zu der Raste gehören ein federnd gelagerter Haken und eine Ausnehmung.

Bewegbare Konsolen sind zwangsweise mehrteilig. Dann
befindet sich der Haken an dem einen Teil und die Vertiefung zum Eingreifen des Hakens im anderen Teil.

Es ist günstig, wenn eine Konsole mehrere Messstellungen erlaubt. Dabei ist kein nennenswerter Mehraufwand für die Raste erforderlich, weil die Raste auch mit mehreren Ausnehmungen zusammenwirken kann, die eine bestimmte Stellung der Konsole definieren.

Eine bevorzugte Ausführungsform der Konsolen sieht die Verwendung von U-förmigen Profilen vor. Solche Profile können eine Führung für die Halterung und das Verschieben anderer Teile bilden.
Auch andere Profile sind für die Herstellung solcher Konsolen geeignet.

In der Regel ist ausreichend, wenn der Messpunkt bei begehbaren Kanälen und anderen begehbaren unterirdischen Bauwerken mit Hilfe der Konsole in einem Abstand von 20 bis 70 cm von der Hohlrauminnenwand gebracht werden kann, es können auch grössere Abstände gewählt werden, Vorzugsweise liegt der Abstand zwischen 30 und 60 cm.
Durch die Beabstandung wird Bewegungsfreiheit für die Handhabung der Messgeräte sichergestellt. Selbst übliche sonstige Einbauten in den unterirdischen Bauwerken können den Messvorgang bei ausreichender Abstandseinstellung nicht stören. Bei den erfindungsgemässen Konsolen kann es sich um dauerhaft oder zeitweise bleibende Einbauten handeln.
Andere bleibende Konsolen kommen insbesondere im Bergbau und Tunnelbau vor.

Zeitweise bleibend sind Konsolen, die zum Beispiel für die Dauer der Errichtung/Herstellung des Bauwerkes vorgesehen sind.

Zeitweise bleibend sind bereits Konsolen, die für mehr als einen Messvorgang im Bauwerk verbleiben.
Andere bleibende Einbauten umfassen insbesondere Medienleitungen.

Wahlweise liegen die Messpunkte nur an einer Seite der unterirdischen
Bauwerke. Wahlweise liegen die Messpunkte aber auch an verschiedenen
Seiten des Bauwerkes. Mit den verschiedenen Messpunkten kann der Refraktion im Bauwerk Rechnung getragen werden. Bei der Refraktion wird die Brechung von Wellen beim Durchgang durch Medien bezeichnet. Je nach Medium kann es dabei zu erheblichen Unterschieden kommen, die in der Geodäsie berücksichtigt werden.

Die Messpunkte können in Längsrichtung der Kanäle
und anderen unterirdischen Bauwerken auf einer geraden oder anders verlaufenden Linie hintereinander liegen. Das ergibt sich zwangsweise,
wenn die Messpunkte nur an einer Seite liegen. Wenn zugleich Messpunkte an mehreren Seiten liegen, so können auch mehrere Messpunkte auf einer gemeinsamen Umfangslinie des Kanals oder anderen unterirdischen
Bauwerkes liegen.
Je näher die Messpunkte bei zylindrischem Bauwerks-Querschnitt der Ebene kommen, in der die Mittellinie des unterirdischen Bauwerkes liegt, desto vorteilhafter ist die erfindungsgemässe Verwendung von Konsolen für die Vermessung.

Die Konsole kann an jeder Bauwerkswand herkömmlich befestigt werden.
Im Gebirgsausbruch kann das in Form einer herkömmlichen Verankerung
erfolgen, ebenso in mineralisch aufgebauten Bauwerkswänden.

Nach der Erfindung sind vorzugsweise Ringe oder Abschnitte von Ringen vorgesehen, die in dem Bauwerkshohlraum montiert werden und die
Konsolen tragen.
Im Folgenden wird von Ringen gesprochen. Dies schliesst
die Abschnitte von Ringen ein. Die Konsolen können an den Ringen verschweisst oder verschraubt oder in sonstiger Weise befestigt werden. Es
kann sich auch um Ringe handeln, die konstruktiver Bestandteil des
Bauwerkes, insbesondere des Kanalrohres sind.
Die Ringe werden dem Querschnitt des Bauwerkhohlraumes angepasst.

Bei rundem Querschnitt des Bauwerkhohlraumes wie bspw. bei einem runden
Kanalrohr zeigt der Ring auch einen runden Querschnitt, bei anderem
Querschnitt des Bauwerkhohlraumes einen entsprechenden Querschnitt, z.B.
eckigen Querschnitt oder den speziellen Querschnitt eines Abevasserkanals.
Die Ringbreite liegt je nach Durchmesser wahlweise zwischen 5 und 30 cm,
im Kanalbau wahlweise bis 15cm, zum Beispiel 8 bis 12cm.

Wahlweise ist ein zweigeteilter Ring vorgesehen. Ein zweigeteilter Ring hat den Vorteil, sich günstig an die Bauwerksinnenwand anzuschmiegen. Zudem ist die Montage eines zweigeteilten Ringes leichter durchzuführen, insbesondere beim Ausbau.

Beim Pressvortrieb werden vorzugsweise ausgewählte Rohrabschnitte/Rohre vor dem Herablassen in die Baugrube mit dem Ring vorbereitet. Die Rohrabschnitte beim Pressvortrieb besitzen eine Länge von zum Beispiel drei Metern. Üblicherweise beträgt die Länge einer geraden Messstrecke etwa 100m. In Kurven beträgt die Messstrecke etwa 50m oder weniger, in Abhängigkeit von der Trassenführung. Deshalb ist nur eine Ausrüstung ausgewählter Rohrabschnitte/Rohre mit dem erfindungsgemäßen Ring und Konsole zweckmäßig. Die so vorbereiteten Rohre werden in dem Schacht zur Rohrpresse abgelassen.

Die Ringabstände werden vorzugsweise vor Beginn eines Vortriebes anhand eines Rohrverlegeplanes bestimmt. Das bestimmt dann die vorstehende Rohrauswahl für die erfindungsgemäßen Ringe und Konsolen.

Es können auch geschlossene und mehrteilige Ringe vorgesehen werden. Zur Erhöhung der Messgenauigkeit kann es günstig sein, eigens für die Vermessungen Ringe einzubauen. Es ist günstig, die Ringe frei von Medienleitungen, Versorgungsleitungen, Schlammtransportleitungen u. ä. zu halten, damit Schwingungen jedweder Art den Ring und damit die Konsolen mit den Messeinrichtungen in keiner Form beeinträchtigen.

In einigen Ausführungsbeispielen kommt auch ein offener Ring in Betracht.

Der offene Ring kann bei entsprechend stabiler Auslegung oder unter Einbeziehung der Bauwerkswand als Verstärkung ähnliches leisten wie ein geschlossener oder geteilter Ring.
Es ist von Vorteil, wenn die geschlossenen wie auch die zwei- oder mehrteiligen Ringe aufspreizbar sind. Durch Aufspreizen lassen sich insbesondere runde Ringe, aber auch anders geformte Ringe im Bauwerkshohlraum verspannen. Das Verspannen lässt sich
mit einer Verschraubung sehr leicht bewirken. Von besonderem Vorteil ist
die Anwendung einer Schnellspannvorrichtung, zum Beispiel mit Kniehebeln
als Spannvorrichtung. Insbesondere die aufspannbaren Ringe besitzen
wahlweise einen flachen Querschnitt, der sich dem Profil des
Bauwerkshohlraumes, also dem Querschnitt der Strecke im Bergbau, dem Tunnelquerschnitt, dem Kanalquerschnitt, dem Rohrquerschnitt, leicht und
gut anpassen kann.
Aufspannbare Ringe lassen sich auch unmittelbar an dem Gebirgsausbruch
festsetzen.

Je nach Region kann es vorkommen, dass zunächst unterirdische Räume ohne Ausbau fertig gestellt werden. Das setzt jedoch ein selbsttragendes Erdreich/Gebirge voraus.
Viel häufiger ist ein nicht selbsttragendes Erdreich/Gebirge.
Das selbsttragende Erdreich/Gebirge erlaubt es, zunächst unterirdische
Räume im Wege des Vortriebes zu erstellen und erst anschliessend mit einem Ausbau zu versehen. Das bedingt die Vermessung während des Vortriebes.
Dabei müssen die Messpunkte bzw. die betreffenden Teile der Messeinrichtung/Vorrichtung in erfindungsgemässer Weise vor dem Ausbau eingebracht werden.
Mit dem Ausbau können die Messpunkte überbaut werden. Die Messpunkte
können anschliessend wieder eingerichtet werden. Der Ausbau kann auch so erfolgen, dass die Messpunkte umbaut werden und danach ihre Funktion weiter erfüllen.

Bei nicht selbsttragendem Erdreich/Gebirge, ist es üblich, gleichzeitig oder spätestens kurzfristig nachlaufend zum Vortrieb den Ausbau einzubringen.
Das gilt zum Beispiel für den Ausbau mit Tübbingen, im Bergbau zum Beispiel für den Ausbau mit nachgiebigem Stahlausbau.

Der Vortrieb kann dabei jeglicher Art sein. Besonders häufig ist der
Vortrieb mit Fräsmaschinen.
Bestimmte Vortriebsverfahren sind systembedingt mit gleichzeitigem
Ausbau verbunden. Das gilt zum Beispiel für den oben erläuterten
Pressvortrieb.

Sowohl bei gleichzeitigem Ausbau als auch bei nachlaufendem Ausbau
können die Rohre mit Messpunkten ausgerüstet werden. Beim Pressvortrieb wandern die Messpunkte mit den Rohrstücken/Rohrabschnitten mit fortschreitendem Ausbau.
Bei anderem Ausbau wie dem Tübbingausbau oder dem Stahlausbau im
Bergbau bleiben die einmal vorgesehenen Messpunkte vorzugsweise erhalten.
Das heisst, je nach Ausbau ergeben sich feste Messpunkte und oder mit dem
Ausbau wandernde Messpunkte.

Entsprechend der Planung muss die Vortriebsmaschine eingemessen werden. Danach ergibt sich beim Vortrieb ein Einstellungsbedarf/Steuerungsbedarf aufgrund von üblichen Abweichungen der Vortriebsmaschine von der Planungsposition. Für die Einstellung erfolgt nach der Erfindung eine Vermessung entlang der Messpunkte mit Hilfe üblicher Messwerkzeuge. Mit der Vermessung lässt sich die Lage, Höhe und Abmessungen der unterirdischen Bauwerke und die Richtung des Vortriebs bestimmen. Dabei können auch zwei oder mehr,
zum Beispiel drei Zieleinrichtungen an der Vortriebsmaschine zum Einsatz kommen, so dass die Lage, Höhe und Vortriebsrichtung der Vortriebsmaschine eindeutig bestimmt werden kann. Zieleinrichtungen können zum Beispiel die bekannten Zieltafeln sein.

Für die Feststellung der Solllage und Sollhöhe des Bauwerks, der Rohrsohle, des Tunnels usw. kann auch das Einmessen der schon vor der Vortriebsmaschine eingebrachten Bauelemente ausreichen. Dabei kann es sich um die ersten bzw. letzten Einbauelemente/Rohre handeln. Üblicherweise reichen mehrere Einbauelemente/Rohre an einem Ende für das Einmessen aus.

Das Einmessen kann auch mit neuen Messfahrzeugen erfolgen. Die Messfahrzeuge können Messprismen oder Messfolien oder andere Messinstrumente/Einrichtungen tragen. Mit den Messinstrumenten werden Messpunkte angezielt, Messwerte erzeugt und mit der Planung abgeglichen. Ein Messprisma wird zum Beispiel mittig an dem Messfahrzeug mit einer konstanten Höhe bezogen auf die Bauwerkssohle angebracht. Die tatsächliche Lage der Bauwerkssohle kann durch eine Libelle am Messfahrzeug definiert werden. Spielt die Libelle ein, so ist das Messprisma lotrecht über der Bauwerkssohle z.B. bei einem Vortriebsrohr.

Wahlweise können nach der Erfindung kontinuierlich oder diskontinuierliche Messungen vorgenommen werden.
Es können auch gleichzeitig oder nacheinander(nachlaufend) verschiedene Messungen vorgenommen werden. Die unterschiedlichen Messungen können sich ganz oder teilweise auf andere Messpunkte stützen. Das dient der Kontrolle der Messungen. Wenn unterschiedliche Messungen zum gleichen Ergebnis führen, so ist die Sicherheit sehr gross, dass die Messung richtig bzw. genau war.
Eine bevorzugte Kontrollmessung ist nach der Erfindung die Rückwärtsmessung, bei der nach Vervollständigung eines Bauwerks eine Nachvermessung dadurch stattfindet, dass von dem Fertigzustand der Baumassnahme zum Ausgangspunkt der Baumassnahme gemessen wird.

Für die erfindungsgemässen Messungen ist es von Vorteil, mindestens drei Messgeräte (zum Beispiel Tachymeter) zu verwenden. Das erlaubt eine Anordnung, bei der die Messgeräte hinter einander angeordnet sind. Zur Verlängerung der Messstrecke können weitere Messgeräte aufgebaut werden. Erfindungsgemäß findet eine schrittweise Vermessung des Bauwerkes statt. Die Messgeräte werden nach Durchführung eines ersten Vermessungsschrittes abgebaut und zum Beispiel um eine Konsole versetzt, so dass der nächste Vermessungsschritt sich mit dem vorhergehenden Vermessungsschritt überlappt. Die Vermessungsschritte werden dann fortgesetzt, bis das gesamte entstandene Bauwerk vermessen ist.
Durch die schrittweise Bauwerksvermessung wird der Investitionsaufwand für die Messgeräte reduziert. Erfindungsgemäß werden Tachymeter und Prismengeräte als Messgeräte verwendet. Dabei entstehen Messstrahlen, die durch die Prismen in definierter Weise gebrochen werden.

Die Brechung der Messstrahlen kann mehrfach erfolgen, so dass die Messstrahlen von dem Prisma vollständig zum Tachymeter reflektiert werden. Daraus kann das Tachymeter die Position des Prismas bestimmen. Ähnliche Reflektionen können auch mit einem Reflektor auf Basis eines Spiegels erzeugt werden. Die Reflektion mit einem Spiegel ist im weiteren eingeschlossen, soweit von einem Prisma zur Reflektion des Messstrahles gesprochen wird.

Die Messstrahlen sind gerade.
Zugleich erlauben zeitgemässe Messgeräte eine Vermessung in Bauwerken über übliche Entfernungen. Bei kurvenförmig/gekrümmt verlaufenden Bauwerken muss der Abstand der Messgeräte so reduziert werden, dass die Messgeräte einander im Bauwerk noch anvisieren können. In den kurvenförmig/gekrümmt verlaufenden Bauwerken ergeben sich winkelig/abgeknickt verlaufende Messstrecken (Polygonzüge).

Die erfindungsgemässen Konsolen mit den verschiedenen Messstellungen für die Messgeräte erlauben es, im Anschluss an eine Vermessung in einer Messstellung noch weitere Vermessungen in demselben Bauwerksabschnitt durchzuführen, so dass Messstrecken entstehen, die parallel zu der ersten Messstrecke verlaufen.
Von Vorteil kann sein, wenn die Messstrecken hin- und hergehend/zick-zackförmig abgewickelt und/oder einander kreuzend herzustellen. Das Hin- und Hergehende und das Kreuzende beschränkt sich dann auf den Hohlraum des Bauwerkes. Soweit im Weiteren von parallelen Messstrecken gesprochen wird, schliesst das ein, dass einzelne oder mehrere Messstrecken oder alle Messstrecken hin- und hergehend im Bauwerk verlaufen und/oder einander kreuzend im Bauwerk verlaufen.

Durch parallel verlaufende Messstrecken eröffnet sich über die damit verbundene Kontrolle eine hohe Sicherheit für eine richtige/genaue Messung bei gleichen Messwerten.

Vorzugsweise werden bei einfach(ohne Parallelvermessung) hergestellten Messstrecken im Wechsel Tachymeter und Prismengeräte eingesetzt. Es kann auch ein Tachymeter zusammen mit mehreren Prismengeräten zum Einsatz kommen. Dabei können die Prismengeräte nicht nur für die Totalreflexion am Messpunkt, sondern in anderer Ausbildung auch für eine Durchleitung bzw. Weiterleitung zu einem Messpunkt genutzt werden.

Wahlweise sind Tachymeter gleichzeitig als Prismengeräte ausgebildet oder mit Prismengeräten kombiniert. Die kombinierten Tachymeter und Prismengeräte eignen sich besonders für die Herstellung paralleler Messstrecken.

Soweit mehrere Prismengeräte vorgesehen sind, ist es von Vorteil, die Prismen zu kodieren. Dazu können die Prismen mit einer Target-ID-Funktion versehen werden. Diese Funktion kann die gleiche sein wie bei der Zielsuche und Zielerkennung eines Trimble-Tachymeters. Die Target-ID sendet einen nicht sichtbaren Infrarotstrahl aus, auf den ein Code aufmoduliert ist. Dadurch erhält man eine eindeutige Identifizierungsmöglichkeit für diesen Zielstrahl und für das damit verbundene Ziel. Die Zahl der Codes ist in weiten Grenzen wählbar. Zum Beispiel können acht Codes wählbar sein. Entsprechend ist die Zahl der identifizierbaren Prismen. Wenn die Suche nach einem Prisma mit einem Tachymeter gestartet wird, so wird dann nach einem aktiven Zielstrahl gesucht, der einen bestimmten Code trägt. Empfängt der Sensor im Tachymeter ein solches Infrarotsignal, so decodiert er die aufmodulierten Information. Ist die empfangene Information mit der gesetzten Information identisch, so ist das richtige Ziel gefunden und erfolgt eine Scharfstellung auf das Prisma.
Differiert die aufmodulierte Information von der im Tachymeter gespeicherten Information oder ist keine Information aufmoduliert, so bleibt das Prisma bei der Suche unbeachtet. Auf diese Weise werden nur die richtigen/gewünschten Prismen von dem Tachymeter berücksichtigt.

Zu den üblichen Messgeräten gehören Tachymeter, Kreisel-Messinstrumente, Messprismen und andere geodätische Messgeräte, insbesondere laserbasierte Messgeräte
und insbesondere mit Rechnerunterstützung, so dass notwendige trigonometrische Rechnungen auch während der Messung ablaufen können.
Dabei werden die erfindungsgemässen Konsolen nicht nur als Messpunkte
oder für Messpunkte, sondern auch für die Aufstellung der Messgeräte
genutzt.

Der Vermessungskreisel dient der Bestimmung unabhängig gemessener Azimute. Hierbei wird das physikalische Grundprinzip ausgenutzt, dass sich die Erddrehung auf einen schnell rotierenden Kreisel in Form eines Richtmomentes auswirkt, welches versucht, die Kreiselachse parallel zur Drehachse der Erde auszurichten. Dieses Prinzip wird zur Bestimmung der geographischen Nordrichtung ausgenutzt. Es ist daher durch Richtungsbestimmung zu einer beliebigen Polygonseite möglich, das jeweilige Azimut der Polygonseite zu bestimmen. In diesem Zusammenhang ist besonders wichtig, dass die durch den Vermessungskreisel ermittelte Azimutrichtung von der Erdrotation abhängig ist.

Unter anderem gilt es, Horizontalwinkel, Vertikalwinkel und Entfernung
zu messen. Diese Aufgaben können mit
einzelnen aber auch mit Kombinationsgeräten erfüllt werden.
Wie oben ausgeführt ist zwischen der Einmessung beim Vortrieb und der
Nachmessung zu unterscheiden. Beides kann mit den gleichen Vorrichtungen
erfolgen.

Die eigentliche Messung erfolgt durch vermessungstechnisches Fachpersonal.

Die Messergebnisse werden vorzugsweise mit einem Rechner gesammelt und ausgewertet. Die Messergebnisse können sich auf einzelne Stellen des Bauwerkes beschränken oder die Bauwerke vollständig abbilden.

Vorteilhafterweise wird eine Nachvermessung nach der Erfindung einfacher.
Es können dabei einzelne Werte nachgemessen werden.
Bei der Nachvermessung kann auch eine Neuvermessung des Bauwerkes
erfolgen. Aufgrund der Rechnerkapazität zeitgemässer Rechner ist eine vollständige Neuvermessung ein ohne weiteres tragbarer Aufwand.

Oder es findet eine teilweise Neuvermessung statt. Dabei kann die
Vermessung ganz oder teilweise auf vorhergehenden Messungen aufbauen.

Das gleiche kann gelten, wenn der Vortrieb unterbrochen wird. Dann kann
die Vermessung wieder von vorn beginnen oder sich auf dem letzten Messpunkt aufbauen.
Gegebenenfalls kann die teilweise Vermessung einschliessen, dass wenige Zwischen-Messpunkte genutzt werden.

Wahlweise kann die erfindungsgemässe Messung auch genutzt werden, um im Vorlauf mit dem Vortrieb ein Einmessen vorzunehmen und im Rücklauf ein Nachmessen vorzunehmen. Wenn sich beim Nachmessen keine substantielle Abweichung der Messwerte gegenüber den Messwerten beim Vorlauf ergeben,
so kann das eine Bestätigung der Richtigkeit des Einmessens sein. Andererseits
wird mit wesentlichen Abweichungen der Vorlauf-Messwerte von den Rücklauf-Messwerten sofort ein Fehler des Bauwerkes deutlich. Für die
Beteiligten ist das von grosser Bedeutung.

Bei der teilweisen oder vollständigen Vermessung kann auch auf Messpunkte ausserhalb des Bauwerkes Rückgriff genommen werden. Dahinter steht die Überlegung, dass die ausserhalb des Bauwerkes vorgesehenen Messpunkte nicht von einer Setzungsgefahr betroffen sind, wie ein neues Bauwerk.

Vorzugsweise wird das Fachpersonal mit einem Wagen/Fahrzeug von Messstelle zu Messstelle gefahren. Das reduziert die körperliche
Belastung erheblich.

Der Wagen besitzt vorzugsweise einen elektrischen, batteriebetriebenen
Antrieb, so dass keine Verbrennungsgase aus dem Betrieb des Wagens
anfallen. Der Wagen kann auch mit herkömmlichen Motoren betrieben werden, wenn die Verbrennungsgase mittels Absaugvorrichtung im Bauwerksbereich entfernt werden bzw. wenn das Bauwerk entsprechend belüftet wird.

Vorteilhafterweise kann der Wagen auch die Messeinrichtungen und Zubehör aufnehmen und tragen.

Wahlweise ist der Wagen mit lenkbaren Rädern versehen. Das erleichtert Abladen/Aufladen des Fahrzeuges nach Lkw-Transport bzw. zum Lkw-Transport
und das Einfahren in den Kanal. Im Kanal kann ein lenkbares
Fahrzeug Einbauten bzw. herumliegendem Material ausweichen.
Allerdings ist auch die Rückwärtsfahrt zu berücksichtigen. Zumindest
während der Vortriebsarbeit in der Bauphase kann das Fahrzeug den Kanal
nicht durchfahren. Die Rückwärtsfahrt ist über längere Strecken sehr
anstrengend, auch schwierig.

Nach der Erfindung ist deshalb wahlweise ein lenkbares Fahrzeug vorgesehen, das zwei Lenkungen besitzt, eine für die Vorwärtsfahrt und eine für die Rückwärtsfahrt.
Wahlweise ist auch eine Hebelsteuerung vorgesehen.
Dabei kann jeder Hebel mehrere Funktionen des Fahrzeugs steuern,
zum Beispiel
a)Lenkung nach rechts und nach links oder
b)die Lenkung und die Geschwindigkeit oder
c)Lenkung, Geschwindigkeit und Vorwärts- und Rückwärtsfahrt.
Dabei kann der Hebel in verschiedenen Richtungen bewegbar sein,
zum Beispiel:
d)schwenkbar in verschiedene Richtungen und/oder
e)verschiebbar in verschiedenen Richtungen.
Jeder Bewegungsrichtung kann eine Steuerungsfunktion zugeordnet werden.

Bei Verwendung eines Sitzes für den Fahrer ist es von Vorteil, den Sitz drehbar anzuordnen, so dass der Sitz nach Drehen für die Rückwärtsfahrt genutzt werden kann. Anstelle einer drehbaren Sitzanordnung kommt auch ein Klappsitz mit zwei Sitzstellungen in Betracht, von denen die eine Sitzstellung für die Vorwärtsfahrt und die andere Sitzstellung nach Umklappen für die Rückwärtsfahrt vorgesehen ist.

Wahlweise kann das Fahrzeug auch mit einem Drehgestell versehen werden, so dass der Sitz mitsamt der Lenkung zur Rückwärtsfahrt umgedreht werden kann.
Wahlweise findet anstelle des lenkbaren Fahrzeuges ein gleisgebundenes Fahrzeug Anwendung. Auch für das gleisgebundene Fahrzeug sind zwei Lenkungen für Rückwärtsfahrt und Vorwärtsfahrt wie auch eine von Vorwärtsfahrt auf Rückwärtsfahrt umstellbare Lenkung von Vorteil. Das gleiche gilt hinsichtlich des Sitzes für den Fahrer.

Wahlweise ist das Fahrzeug als gleisfreies Fahrzeug dreirädrig ausgelegt. Dreirädrige Fahrzeuge haben besonders kleine Wendekreise, d.h. sind besonders beweglich.
Bei der relativ geringen Fahrgeschwindigkeit des Fahrzeuges kann auch eine Lenkstange anstelle eines Lenkrades am Fahrzeug Anwendung finden.
Günstig sind auch kleine Abmessungen des Fahrzeuges. Das trägt den
beengten Verhältnissen in unterirdischen Bauwerken Rechnung.
Günstig sind auch Ösen an dem Fahrzeugrahmen, um das Fahrzeug in den Pressschacht und wieder zurück zu heben. Die Ösen dienen dem Anschlagen
eines Hubgeschirres.

Das Fahrzeug kann auch nur als Personenbeförderungsmittel für z. B. Baustellenpersonal genutzt werden, um die teilweisen langen Strecken zur Vortriebsmaschine zu überbrücken.

Wahlweise werden die Messgeräte auf den Konsolen mit Messgeräten kombiniert, die in anderer Weise im Bauwerk gehalten sind. Die andere Halterung als die Halterung mit Konsolen kann neben den Konsolen oder anstelle der Konsolen Anwendung finden.
Die vorstehend beschriebene Vermessung kann unabhängig von der Frage der Halterung der Messgeräte wie in den Ausführungsbeispielen erfolgen, bei denen die Messgeräte im Bauwerk/Kanal allein mit Konsolen gehalten werden.

Von Vorteil ist eine lösbare Verklebung von Prismen im Bauwerk. Damit wird das Bauwerk nicht beeinträchtigt.
Zu den weiteren Montagemöglichkeiten gehört auch eine vorhergehende Anbringung einer Halterung als Zwischenstück im Bauwerk, an der die Prismen dann montiert werden können. Die Halterung besteht dabei vorzugsweise aus Stahl und wird ihrerseits auf der Bauwerksfläche geklebt oder geklemmt oder in sonstiger Weise befestigt. Bei Verwendung von Stahl ist es möglich, die Prismen mit einem Magneten auszurüsten, so dass die Prismen lediglich mit der Halterung in Berührung gebracht werden müssen, um von dem Magneten in Messstellung gehalten zu werden. Die Anbringung wie auch das Abnehmen der Prismen verursacht nur minimalen Aufwand.
Die anklebbare Halterung kann die Form eines dünnen flexiblen Stahlbleches besitzen, das sich jeder Form der Bauwerksfirste oder der Bauwerksseitenwand anpasst. Das Stahlblech kann eine Dicke von wenigen Zehntelmillimetern besitzen, zum Beispiel eine Dicke von kleiner 0,3mm, vorzugsweise eine Dicke kleiner 0,2mm, noch weiter bevorzugt eine Dicke von 0,1mm.

Das Stahlblech kann in Längsrichtung des Bauwerkes durchgehend verlegt werden. Günstig ist die Verwendung von Stahlblechabschnitten. Für die Abschnitte ist von Vorteil, wenn bei der Bauwerksplanung ein Rohrverlegeplan erstellt wird und dabei zugleich die Stellen markiert werden, an denen ein Messpunkt für die Vermessung des Bauwerkes liegen soll. Dann können die Stahlblechabschnitte an den durch Markierung vorbestimmten Stellen im Bauwerk verklebt werden. Mit dem Rohrverlegeplan kann die Zahl der Vermessungsschritte und damit auch der Vermessungsaufwand minimiert werden. Dies ist ohne Verlegeplan üblicherweise weitaus schwieriger. Soweit die Zahl der Vermessungsschritte nicht von entscheidender Bedeutung ist, kann die Länge der Vermessungsschritte unter Erhöhung der Zahl der Vermessungsschritte nach Bedarf verringert werden.

Die Stahlbleche besitzen als Halterungen für die beschriebenen Prismen vorzugsweise eine Dicke kleiner/gleich 0,5m, weiter bevorzugt eine Dicke kleiner/gleich 0,4m und höchst bevorzugt eine Dicke kleiner/gleich 0,3m.
Die Stahlbleche besitzen vorzugsweise eine Breite kleiner/gleich 0,3m, noch weiter bevorzugt eine Breite kleiner/gleich 0,2m und höchst bevorzugt eine Breite kleiner/gleich 0,1m.
Die Bleche werden wahlweise von der Rolle abgezogen und abgelängt. Die Länge der Abschnitte ist vorzugsweise kleiner/gleich 1m, noch weiter bevorzugt kleiner/gleich 0,75m und höchst bevorzugt kleiner/gleich 0,5m.

Die Halterung für die Prismen kann bleibend oder lösbar im Bauwerk montiert werden.
In dem Umfang wie die Prismen für einen Vermessungsschritt vorgesehen sind und
in dem Umfang wie die Prismen für mehr als einen Vermessungsschritt im Bauwerk verbleiben sollen, wird die Zahl der Prismen erhöht.

Der Vorteil des erfindungsgemässen Verbleibens von Prismen ist ihre Nutzung bei der Vermessung in überlappenden Vermessungsschritten und gegebenenfalls die Möglichkeit ihrer Nutzung für ein gewünschtes Nachmessen.

Wahlweise sind die Prismen an der Berührungsfläche mit dem Bauwerk klebrig ausgebildet. Das kann mit einem beidseitig klebenden Band erfolgen. Solche Bänder sind für Randdämmstreifen aus Kunststoffschaum bekannt. Solche Klebestreifen besitzen Kleber auf bituminöser Basis oder Acrylatkleber, die nach Kehren oder Fegen der betreffenden Bauwerksfläche trotz des verbliebenen Restschmutzes haften. Gleichwohl sind die Klebebänder extrem preisgünstig und eignen sich hervorragend als Verbrauchsmaterial. Ihre Handhabung ist leicht. Vor dem Verkleben sind die Klebebänder an den Klebeflächen abgedeckt. Zum Verkleben wird eine Abdeckung des Klebebandes abgezogen und der Klebestreifen auf die vorgesehene Fläche gedrückt. Nach dem Gebrauch lassen sich die Klebebänder wieder abziehen.
Vorzugsweise wird jedes Prisma mit einem Klebeband vorbereitet.
Zur Montage eines Prismas für die Vermessung wird die verbliebene Abdeckung abgezogen und das Prisma mit der klebrigen Unterseite auf die vorgesehene Bauwerksfläche gedrückt. Das Prisma bleibt danach sicher in seiner gewählten Stellung an der Bauwerksfläche.

Es ist von Vorteil, wenn auch kurze Klebebandabschnitte durch die Vermessungsmannschaft von einer Klebebandrolle geschnitten werden. Wahlweise können aber auch vorbereitete Klebestücke beigestellt werden.
Die Klebestreifen und Klebestücke lassen sich nach einmaligem oder mehrmaligem Gebrauch an den Prismen erneuern.

Die Handhabung der Prismen kann auch noch dadurch erleichtert werden, dass Abziehlaschen an den Klebestreifen vorgesehen sind. Die Abziehlaschen können durch ein überstehendes Ende des Klebestreifens gebildet werden.

Soweit geklebte Halterungen vorgesehen sind, an denen die Prismen mit Magnetkraft gehalten werden können, kann die Klebung auf eine bestimmte Zeit, temporär, oder auf unbestimmte Zeit, bleibend, ausgelegt werden. Für eine temporäre Halterung sind die beschriebenen Klebebänder geeignet.
Für eine bleibende Klebung sind Baukleber wie Polyurethan-Kleber geeignet.

In der Zeichnung sind verschiedene Ausführungsbeispiele dargestellt.

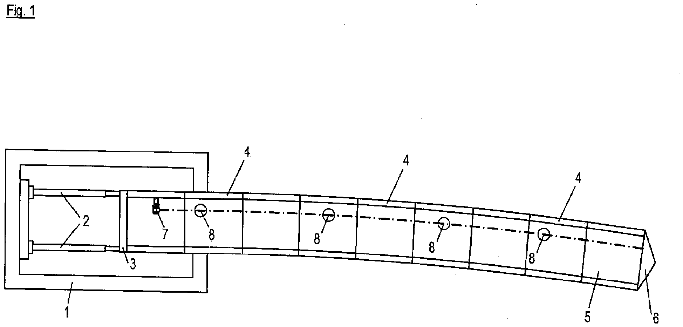

Fig. 1 zeigt einen Pressvortrieb für unterirdisch zu verlegende Kanalrohre.
Zu dem Pressvortrieb gehören:
ein Pressschacht 1
ein Druckring 3
diverse Rohrstücke 4
ein Vortriebsschild 6. Die verschiedenen Rohrstücke 4 bilden im Ausführungsbeispiel ein Kanalstück Die Krümmung entsteht durch entsprechende Steuerung des Vortriebsschildes 6.
Zur Steuerung ist eine Laserstrahlsteuerung vorgesehen.
Dabei ist ein Laserstrahler 7 vorgesehen.
Der Laserstrahler 7 wird an einem Anfangs-Messpunkt im Pressschacht zu Beginn des Bauvorhabens eingesetzt, um den aus dem Pressschacht austretenden Schild 6 richtig zu lenken.
Aufgrund der grossen Länge des vorgesehenen Kanals wird der Pressvortrieb im Ausführungsbeispiel durch eine als Fräse ausgebildete Vortriebsmaschine 5 unterstützt.
Im Ausführungsbeispiel ist der Vortriebsschild gegenüber der Vortriebsmaschine gelenkig angeordnet und mit mehreren Hydraulikzylindern gehalten. Diese Zylinder werden bei rotierendem Vortriebsschild mit rotierenden Fräsern solange betätigt, bis der Vortriebsschild 6 und die Vortriebsmaschine die richtige Richtung eingenommen haben.
Sobald der Pressenhub ausreicht, um ein Rohrstück 4 zwischen der Vortriebsmaschine 5 und der Presse einsetzen zu können, erfolgt das und
setzt sich der Pressvorgang fort. Dabei wird zu einem passenden Zeitpunkt erneut gemessen, ob die Vortriebsmaschine von der Plan-Linie abweicht.
Dabei ist im Ausführungsbeispiel die Krümmung so gering, dass die Vortriebsmaschine unmittelbar mit dem Laser anvisiert werden kann.
Nachdem weitere Rohrstücke 4 eingesetzt und verpresst worden sind und der Abstand zu der Vortriebsmaschine so gross geworden ist, dass die Messgenauigkeit leidet, wird ein Messpunkt 8 in einem der Rohre 4 eingerichtet bzw. wahrgenommen. Von dem Messpunkt 8 aus wird die Vortriebsmaschine dann erneut anvisiert und entsprechend dem Laserstrahl ausgerichtet.
Das wiederholt sich mit weiteren eingezeichneten Messpunkten 8.

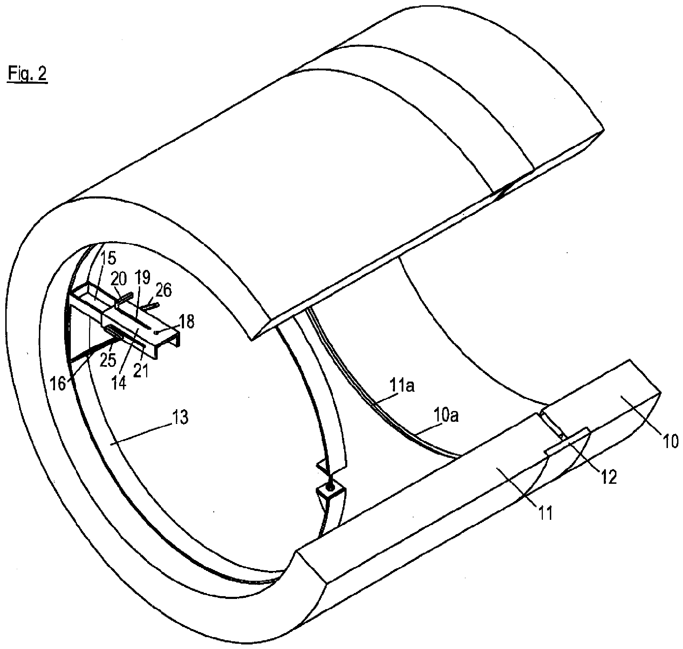

Fig. 2 zeigt einen solchen Messpunkt 8. Dieser Messpunkt liegt innerhalb eines Rohrsegmentes. Die Rohre sind in Fig. 2 mit 10 und 11 bezeichnet und bestehen aus Beton. Zwischen beiden Rohrenden 11a und 10a ist ein Passring und Dichtring 12 vorgesehen. In anderen Ausführungsbeispielen hat der Ring zugleich die Aufgabe, den Pressdruck gleichmässig auf die in Druckrichtung vor ihm liegenden Rohre zu übertragen. Diese Funktion entsteht durch eine gewisse Nachgiebigkeit des Ringes. Vorzugsweise wird die Nachgiebigkeit durch Verwendung weichen Holzes für den Ring erreicht.

In dem Rohr 11 befindet sich in der Nähe des Rohrendes 11a ein Spannring
13 aus Stahl. Der Spannring 13 ist dem Innendurchmesser des Rohres 11
angepasst. In anderen Ausführungsbeispielen ist der Spannring mehrgeteilt.
Zum Spannen ist der Spannring 13 in Richtung der Mittelachse geschlitzt.
Am Schlitz sind gegenüberliegend zwei Winkelbleche verschweisst. Durch
die Winkel greift eine Schraube. Mit Hilfe von Schraubenmuttern und
Kontermuttern können die Winkel auseinander gedrückt werden. Das bewirkt
eine Aufweitung des Ringes und seine Verspannung in dem Rohr. In den Ausführungsbeispielen mit mehrteiligen Ringen kann die Verspannvorrichtung gemeinsam auf alle Teile der Ringe wirken. In anderen Ausführungsbeispielen sind für mehrteilige Ringe mehrere Verspannvorrichtungen vorgesehen.

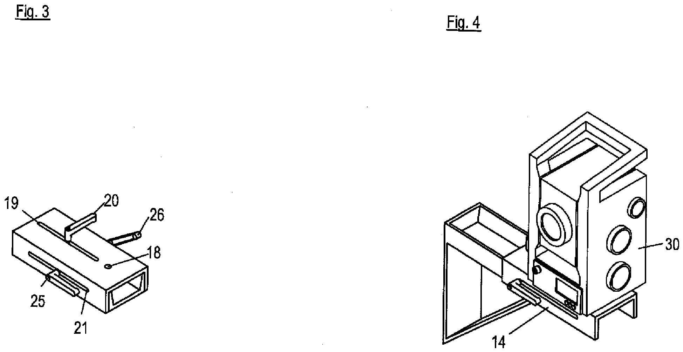

Ferner sind mit dem Ring 13 die festen Teile einer verstellbaren Konsole 14
verschweisst.
Zu den festen Teilen gehören eine Stütze 16 und U-Profil 15. Zu den
beweglichen Teilen gehört ein anderes U-Profil, das mit einem nichtdargestellten Längsschlitz und mit Längsschlitzen 19 und 21 versehen ist. Das bewegliche
U-Profil wird in jeder gewünschten Stellung mittels Klemmschrauben mit
dem festen U-Profil verspannt. Die Schrauben sind an den Enden mit Hebeln
versehen und greifen durch die Schlitze 19 und 21 in Gewindelöcher des
festen U-Profils. Von den Schrauben und Hebeln ist in Fig. 2 der Hebel 20
dargestellt. Fig. 3 zeigt zusätzlich die Hebel 25 und 26. Der Hebel 26
befindet sich an der Konsolenseite, die der Konsolenseite mit dem Hebel 25
und dem Schlitz 21 gegenüberliegt. Zu dem Hebel 26 gehört der vorstehend erwähnte, nicht dargestellte Schlitz.

Das bewegliche U-Profil besitzt im Übrigen einen Messgeräteanschluss 18 zur Aufnahme eines Dreifusses als Halterung der Messinstrumente und/oder der Messprismen.

Fig. 4 zeigt die erfindungsgemässe Konsole in Messfunktion mit einem handelsüblichen Tachymeter als Messgerät. Im Ausführungsbeispiel mit der Produktbezeichnung Trimble.
Mit dieser Bauart lassen sich passive Ziele mit einer aktiven Ziel-Identifikation verfolgen. Das Instrument erfasst und verfolgt zahlreiche
konventionelle Prismen und Ziele auch auf grosser Entfernung.
Die Ziel-Identifikation sichert das Anvisieren des richtigen Zieles. Dadurch
können auch mehrere Prismen im Messgebiet zum Einsatz kommen.
Das Gerät besitzt über Servomotoren und Winkelsensoren, ferner eine Fehlerkompensation.
Das Gerät besitzt einen internen Rechner für die vorstehend beschriebenen
Aufgaben, ausserdem eine eigene Stromversorgung und eine drahtlose Fernübertragung von Daten. Dies kann genutzt werden, um die Arbeit an
einem ausserhalb des Kanals stehenden Rechner mitzuverfolgen und mit Planungsinfos zu beeinflussen.
Die Fernübertragung schliesst ein, dass bei grösser werdenden Abständen im Kanal Verstärker für die Funksignale im Bauwerk angebracht werden. Die Verstärker nehmen ankommende schwache Signale auf und senden verstärkte Signale weiter.

In der Messstellung nach Fig. 2 und 4 ist die Konsole 14 ausgezogen und
mittels der Hebel 20,25 und 26 und der zugehörigen Arretierungs- und Klemmschrauben verspannt.

Die Fig. 3 zeigt die Konsole 14 in zusammengeschobenem Zustand. Die
Konsole 14 wird nach der Beendigung des Messvorganges
zusammengeschoben, um den Innenraum des Kanals freizugeben.

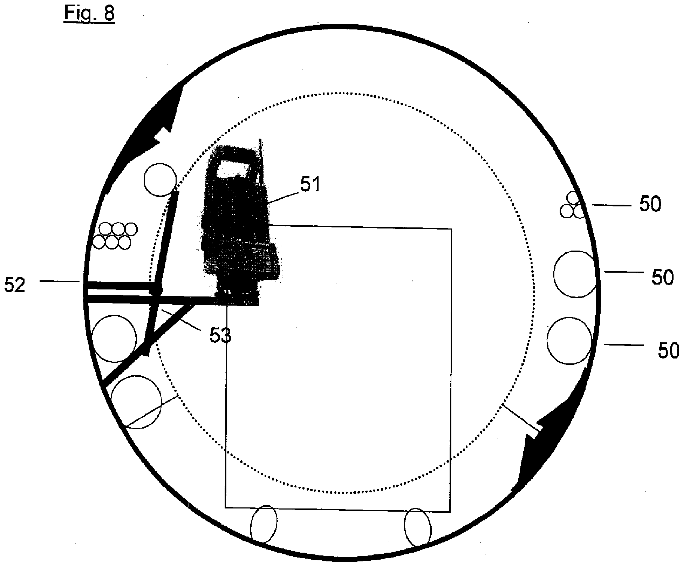

Fig. 8 zeigt einen ringförmigen Kanal mit verschiedenen Einbauten 150.
Anstelle der ausziehbaren Konsolen der anderen Ausführungsbeispiele ist eine Konsole 152 mit einem doppelarmigen, ausschwenkbaren Hebel 153
vorgesehen, der in der ausgeschwenkten Stellung einen Tachymeter 151 trägt.
Der Hebel wird in anderen Ausführungsbeispielen seitlich aus- und eingeschwenkt

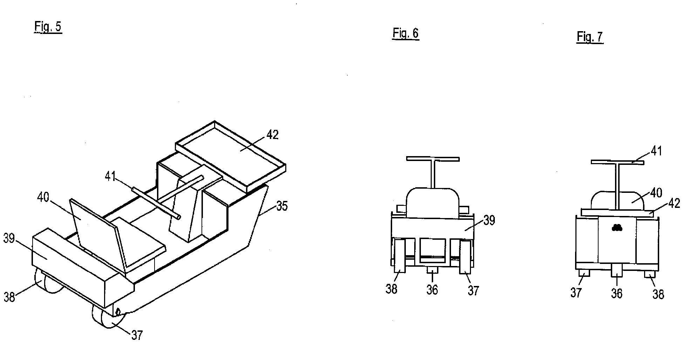

Die Fig. 5 bis 7 zeigen ein für die Verwendung beim erfindungsgemäßen Verfahren geeignetes Fahrzeug. Das Fahrzeug erleichtert die Vermessung insbesondere in kleineren Rohrquerschnitten. Dort müssen die Messgeräte nicht mehr in gebückter Haltung von dem Vermessungspersonal durch die Rohre getragen werden. Die Messgeräte können bequem mit dem Fahrzeug transportiert werden.
Das Fahrzeug ist dreirädrig, mit zwei Hinterrädern 37,38 und einem
Vorderrad 36. Die Hinterräder 37,38 sind mit einem Elektroantrieb versehen.
Die Antriebsbewegung kann elektrisch geregelt werden, im
Ausführungsbeispiel von 0 bis 10km pro Stunde.
Der Antrieb wird von einer Batterie gespeist, die in einem Batteriekasten 39
angeordnet ist.
Der Batteriekasten 39 ist mit dem Fahrzeugrahmen 35 verbunden.
Vorn befindet sich an dem Fahrzeugrahmen 35 eine Tragfläche 42 zum
Transport der Messgeräte.
Ferner gehört zu dem Fahrzeug eine Lenkstange 41 als Lenkung. Die
Lenkstange 41 ist drehbeweglich in dem Fahrzeugrahmen 35 gehalten und
mündet in eine Gabel, in der das Rad 36 gehalten ist.
Schliesslich ist noch ein Schalensitz für den Fahrer im Fahrzeugrahmen
vorgesehen.

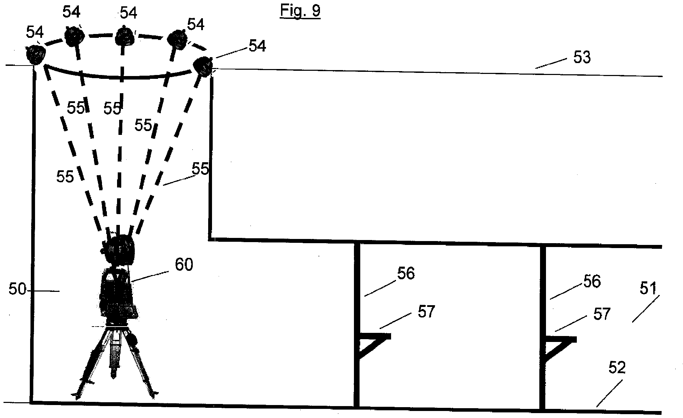

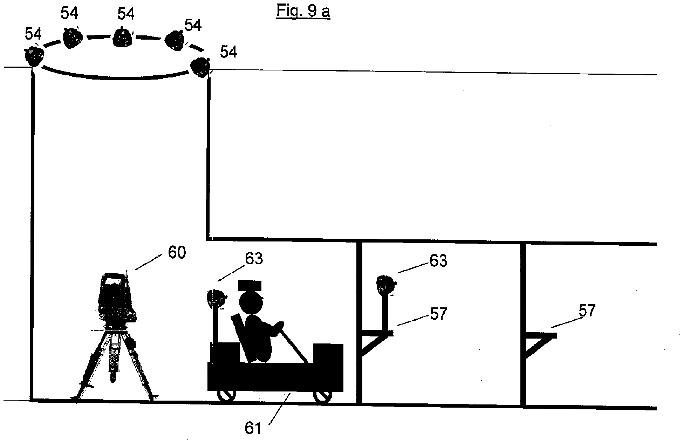

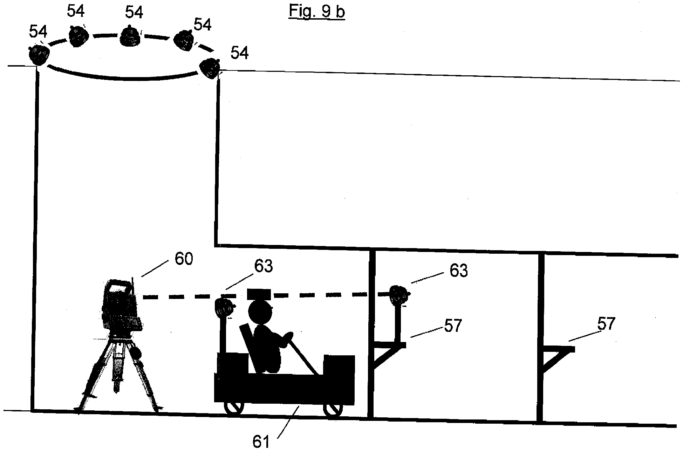

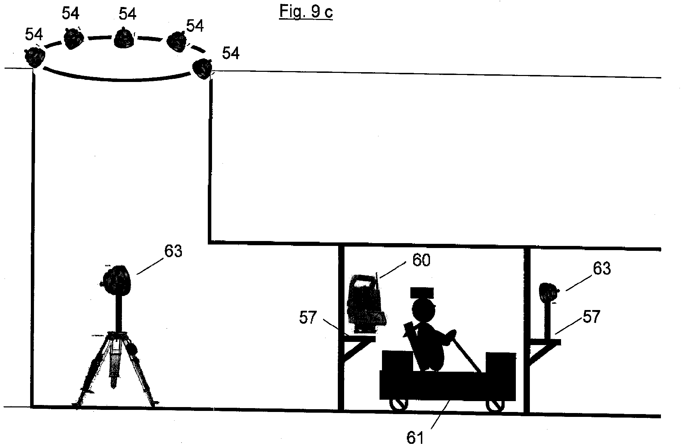

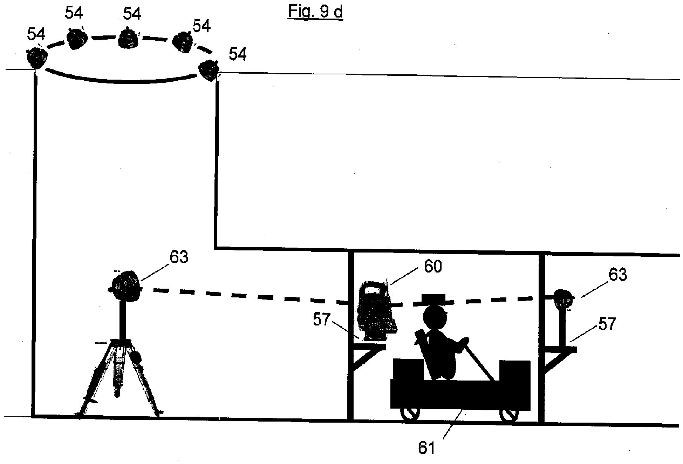

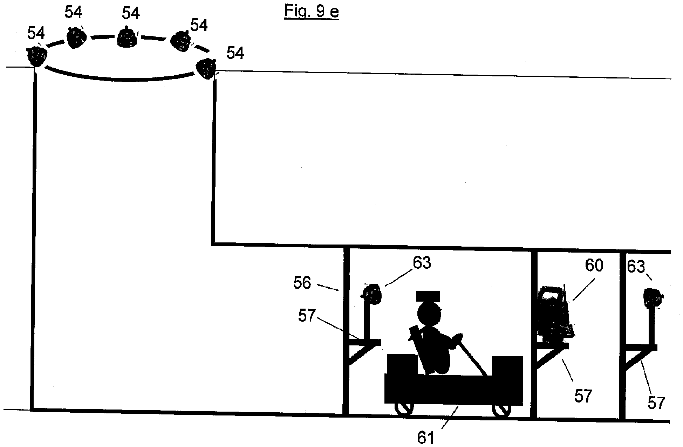

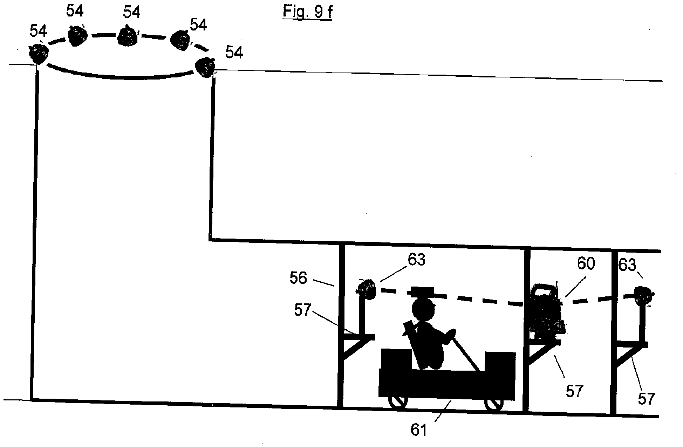

Fig. 9 zeigt in schematischer Ansicht den Beginn eines Rohrvortriebes.
Dabei ist zunächst ein Schacht 50 abgetäuft worden. Der Schacht wird dabei einschliesslich der Schachtsohle mittels eines Tachymeters 60 eingemessen.
Im Ausführungsbeispiel hat der Tachymeter 60 zugleich eine automatische Einstellung auf die Horizontale. In anderen Ausführungsbeispiel besitzt der Tachymeter die Funktion nicht und ist eine separate Vorrichtung mit dieser Funktion unter dem Tachymeter vorgesehen. Solche separaten Vorrichtungen sind unter der Bezeichnung Automatik-Dreifuss AD-12 handelsüblich.

Zur Einmessung werden zugleich Messpunkte 54 an der Erdoberfläche 53 genutzt. Die Messpunkte werden durch Prismen gebildet, die mit dem Tachymeter anvisiert werden. Die Messstrahlen des Tachymeters sind gestrichelt dargestellt und mit 55 bezeichnet.

Sobald die Schachtsohle die definierte Form und Tiefe erreicht hat, wird beim Rohrpressvortrieb eine Rohrpresse eingesetzt, mit der dann eine Anzahl von Rohren - im Ausführungsbeispiel für einen Kanalabschnitt 51 - in das Erdreich gepresst werden. Dabei entsteht eine Kanalsohle 52. Die Rohre für den Kanalabschnitt 51 sind im Ausführungsbeispiel jeweils mit einem lösbaren Spannring 56 versehen. Jeder Spannring trägt im Ausführungsbeispiel eine ausziehbare Konsole 57mit vier Messstellungen. Die Messstellungen liegen im Ausführungsbeispiel in der Kanalmitte, wo sie gut zugänglich sind. Jede Konsole wird in der jeweils gewünschten Messstellung durch eine Raste positioniert und durch eine Klemmung der bewegten Teile gesichert, so dass selbst bei der Wiederholung der Messung eine definierte Messstellung gegeben ist.
Konsolen ohne Raste kommen vorzugsweise zur Anwendung, wenn nach Verlassen der Messstellung keine Rückkehr in die genau gleiche Messstellung erforderlich wird.

Jede Konsole besitzt im Ausführungsbeispiel einen Schnellverschluss für die Montage unterschiedlicher Geräte. Zu den Geräten gehören Tachymeter, Prismen. Der Schnellverschluss erlaubt einen schnellen Wechsel nach Bedarf. Die Konsolen werden im Ausführungsbeispiel im Wechsel mit Prismen und Tachymetern besetzt. Durch jedes Rohr, welches im Pressvortrieb die bereits im Erdreich vorgeschobenen Rohre noch weiter vorschiebt und welches mit einem Spannring und einer Konsole versehen ist, ergibt sich eine neue Situation.
Die Messung wird vom Schacht bis in das vorderste Rohr und nach Bedarf weiter auf die Abbauvorrichtung vor dem vordersten Rohr geführt.

Im Ausführungsbeispiel wird mit einem Tachymeter und zwei Prismen gearbeitet.
Alle Messgeräte werden im Ausführungsbeispiel mit einem Fahrzeug 61 bewegt.
Im Ausführungsbeispiel geht jede neue Messung/Vermessungsschritt von einem gesicherten/vermessenen Messpunkt aus. Der erste Vermessungsschritt geht von einer gesicherten/vermessenen Tachymeterposition im Schacht aus. Diese Position ist von den Messpunkt 54 am Schachtanfang abgeleitet worden.
Für den ersten Vermessungsschritt wird gemäss Fig. 9a das Prisma 63 auf der nächsten Konsole 57 aufgestellt.
Dazu ist ein Fahrzeug 61 im Schacht abgesenkt und das Prisma 63 mit dem Fahrzeug 61 zur nächsten Konsole 57 transportiert worden.
Mit dem Tachymeter 60 wird dann aus dem Schacht die Position des Prismas 63 auf der Konsole 57 genau bestimmt. Dies ist in Fig. 9b dargestellt.

Im Ausführungsbeispiel wird nach der Vermessung das Tachymeter 60 von dem bis dahin verwendeten Stativ abmontiert und mit dem Fahrzeug 61 in den Kanal verfahren, um es auf der ersten Konsole 57 aufzusetzen. Das Prisma 63 wird auf das Stativ auf der Schachtsohle gesetzt. Ein weiteres Prisma 63 wird zur zweiten Konsole gefahren und aufgesetzt. Dies ist in Fig. 9c dargestellt. Anschließend wird das auf dem Stativ befindliche Prisma 63 mit dem Tachymeter ebenso anvisiert wie das Prisma 63 auf der zweiten Konsole. Das ist in Fig. 9d dargestellt. Danach kann das Prisma 63 vom Stativ demontiert und erneut auf der ersten Konsole 57 montiert werden. Das Fahrzeug 61 bringt das Tachymeter 60 von der ersten zur zweiten Konsole 57 und das zuvor auf der zweiten Konsole platzierte Prisma wird auf die dritte Konsole gesetzt. Dieser Vorgang ist in Fig. 9e dargestellt. Anschließend misst das Tachymeter die beiden jeweiligen Prismen ein, Fig. 9f. Das Tachymeter vermisst jedes Prisma. Das wird als Satz bezeichnet. Wenn das Tachymeter die Prismen mehrmals misst, so kann von mehreren Sätzen gesprochen werden

Wenn das Tachymeter und die Prismen um eine Konsole versetzt werden beginnt ein neuer Vermessungsschritt. Die Vermessung der Prismen wiederholt sich bei jedem Vermessungsschritt.

Jeder Vermessungsschritt überlappt sich im Ausführungsbeispiel mit den benachbarten Vermessungsschritten. Bei jedem Vermessungsschritt befindet sich der Tachymeter zwischen den beiden Prismen. Dabei verlassen alle Messgeräte (Tachymeter und Prismen) den bisherigen Aufstellungsort auf den Konsolen 57, um in gleicher Folge von Prisma/Tachymeter/Prisma auf einer anderen Konsole aufgestellt zu werden. Gleichwohl bilden die weiteren Vermessungsergebnisse mit den vorhergehenden Vermessungsergebnissen eine zusammenhängende Kette von Messergebnissen, weil die Konsolen eine gleiche, definierte Basis für alle Messgeräte bilden.

In anderen Ausführungsbeispielen wird mit mehr Tachymetern und/oder mit mehr Prismen und mit mehr Fahrzeugen gearbeitet.

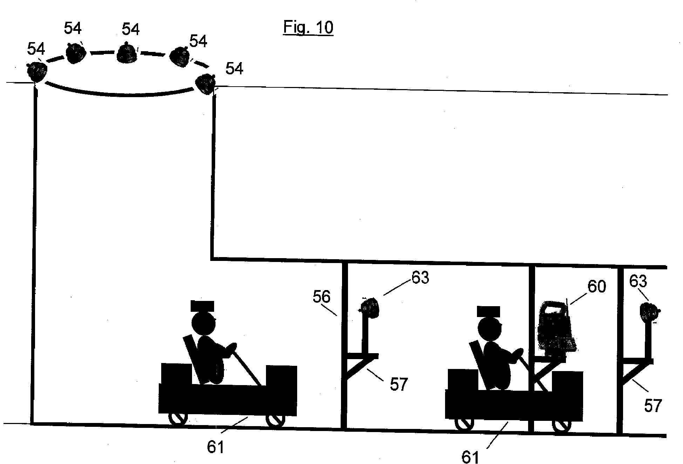

Im Ausführungsbeispiel nach Fig. 10 ist zusätzlich ein zweites Fahrzeug 61 im Einsatz. Die Fahrzeuge besitzen Transportflächen 62.

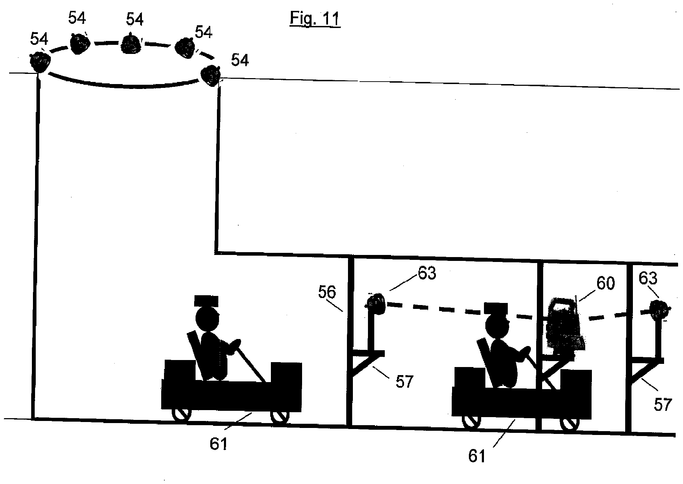

Das erste Fahrzeug (im Bild rechte Fahrzeug) fährt mit einem Tachymeter 60 zur zweiten Konsole und besetzt diese mit dem Tachymeter 60. Das zweite Fahrzeug (im Bild linke Fahrzeug) fährt zur ersten Konsole und besetzt diese mit dem Prisma 63, welches von dem Schachtstativ abgenommen worden ist, Fig. 9d). Das erste Fahrzeug fährt zu einer dritten Konsole und besetzt diese ebenfalls mit einem Prisma 63. In Fig. 11 ist der Messvorgang mit dem Messvisuren (gestrichelte Linie) dargestellt.

Es kann von zwei gesicherten/vermessenen Messpunkten des Vortriebs zu einem weiteren Messpunkt gemessen werden.

Günstig ist ein Betrieb mit einem Tachymeter 60 und zwei Prismen, wobei sich ein Prisma 63 in Bauwerkslängsrichtung/Kanallängsrichtung immer vor und hinter dem Tachymeter 60 befindet. Das Tachymeter kann durch Anvisieren und Messen des hinteren (in Kanallängsrichtung) vermessenen Prismas und nach Drehen, Anvisieren und Messen des anderen, vorderen Prismas dessen Position bestimmen. Der nächste Vermessungsschritt sieht vor, dass das Tachymeter und das hintere Prisma demontiert werden, dann mit dem Fahrzeug in Vermessungsrichtung auf noch nicht vermessene Vermessungspunkte transportiert und dort auf den zugehörigen Konsolen montiert werden.

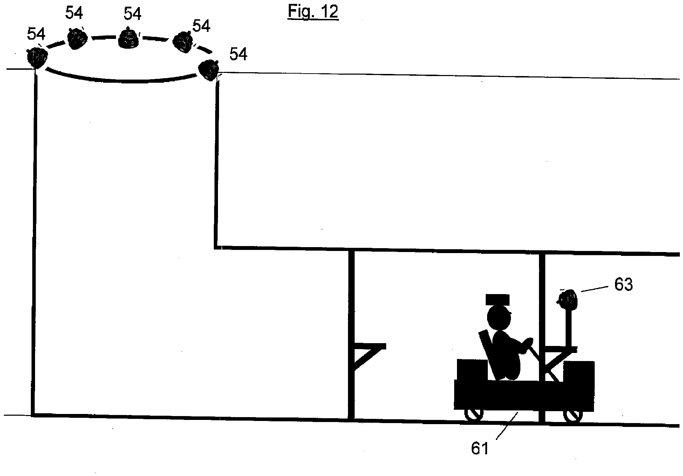

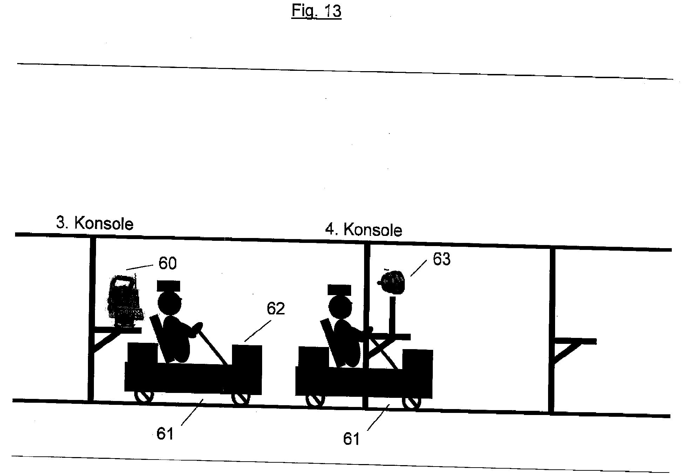

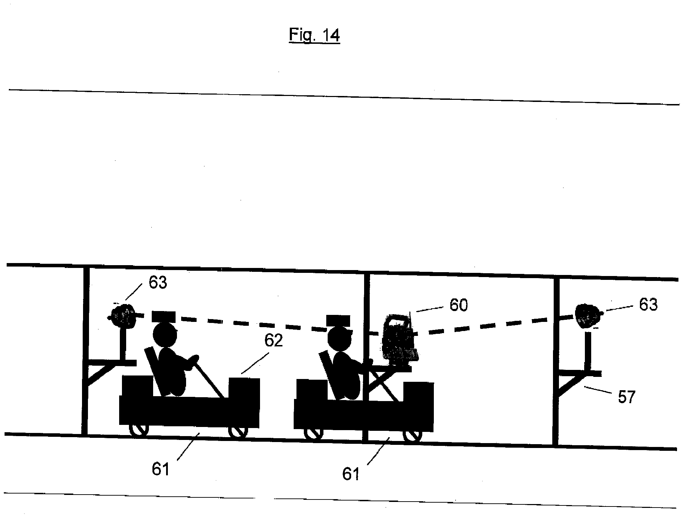

In einem weiteren Ausführungsbeispiel sind zwei Fahrzeuge 61 vorgesehen. In dem in Fig. 11 dargestellten Vermessungsschritt wird - nachdem der erste Messpunkt auf der ersten Konsole mit einem Prisma 63 besetzt, die zweite Konsole mit einem Tachymeter 60 versehen und die dritte Konsole mit einem Prisma versehen ist - eingemessen. Das Tachymeter misst dabei wie im vorigen Ausführungsbeispiel in mehreren Sätzen.
Nach dem Vermessungsschritt von Fig. 11 werden die Messgeräte mit den Fahrzeugen 61 für
einen weiteren Vermessungsschritt verfahren. Das ist in Fig. 12 und 13 dargestellt. Dabei werden das Tachymeter und das in der Ansicht nach Fig. 13 rechte Prisma von den zugehörigen Konsolen demontiert und mit dem ersten Fahrzeug jeweils eine Konsole weiter transportiert und dort auf die Konsole aufgesetzt. Dann ergibt sich eine Situation, wie sie in Fig. 14 dargestellt ist. Dabei ist wieder vor und hinter dem Tachymeter ein Prisma vorgesehen, so daß die Vermessung wie in Fig. 11 erfolgen kann.

Im Ausführungsbeispiel werden das Tachymeter und die Prismen mit den Wagen 61 durch die Rohre transportiert.
In anderen Ausführungsbeispielen werden das Tachymeter und die Prismen durch das Vermessungspersonal getragen.

Die Wagen 61 sind im Ausführungsbeispiel dreirädrig, mit zwei Hinterrädern und einem Vorderrad. Die Hinterräder sind mit einem Elektroantrieb versehen.
Die Antriebsbewegung kann elektrisch geregelt werden, im Ausführungsbeispiel von 0 bis 10km pro Stunde.
Der Antrieb wird von einer Batterie gespeist, die in einem Batteriekasten angeordnet ist.
Der Batteriekasten ist mit dem Fahrzeugrahmen verbunden.
Vorn und hinten befinden sich an dem Fahrzeugrahmen Tragflächen 62 zum Transport der Messgeräte, Prismen 63 und/oder Tachymeter 60.
Ferner gehört zu dem Fahrzeug eine Lenkstange als Lenkung. Die Lenkstange ist drehbeweglich in dem Fahrzeugrahmen gehalten und mündet in eine Gabel, in der das vordere Rad gehalten ist.
Schliesslich ist noch ein Schalensitz für den Fahrer im Fahrzeugrahmen vorgesehen.

Beim ersten Einmessen der Rohre kann nur mit dem Tachymeter 60 im Schacht und einem Prisma 63 gearbeitet werden. Dazu wird das Prisma mit dem Wagen 61 zur ersten Konsol 57 gefahren und dort auf der Konsole aufgesetzt. Der Transport der Messgeräte in den Rohren ist in Fig. 10 dargestellt.

Zum Aufsetzen werden die Konsolen im Ausführungsbeispiel ausgezogen.
Mit dem im Schacht positionierten Tachymeter 60 lässt sich das Prisma 63 auf der ersten Konsole danach einmessen.
Da die Konsolen im Ausführungsbeispiel insgesamt vier Ausziehstellungen anbieten, ist es möglich, an bis zu vier Stellungen an der Konsolle zu messen. Soweit an den benachbarten Konsolen gleichfalls eine Vielzahl von Messstellungen möglich ist, vervielfacht sich in der Kombination dieser Konsolen die Zahl möglicher Messstellungen.

In anderen Ausführungsbeispielen ergeben sich mit anderen möglichen Messstellungen andere Möglichkeiten zur Messung.

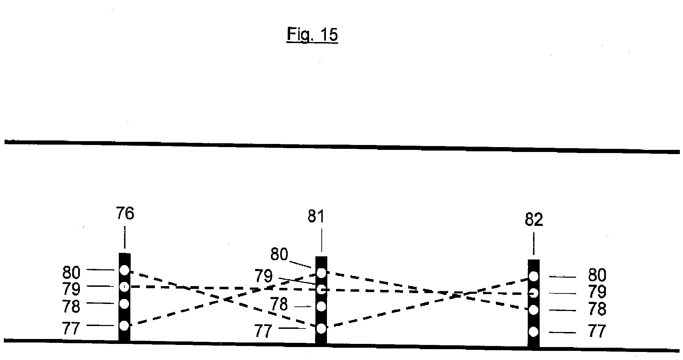

Die Möglichkeiten zur Variation der Messgeräteaufstellung mit erfindungsgemässen Konsolen ist in Fig. 15 dargestellt. Dabei sind drei hintereinander in einem Rohrvortrieb 75 angeordnete Konsolen mit 76, 81, 82 bezeichnet. Jede der Konsolen hat im Ausführungsbeispiel vier horizontal nebeneinander liegende Aufstellungsmöglichkeiten 77,78, 79, 80. In Anlehnung an die Fig. 14 sind die Aufstellungsmöglichen in der Situation der Fig. 14 auf den Konsolen 76 und 82 für Prismen bestimmt, während die Konsole 81 für die Aufstellung eines Tachymeters bestimmt ist. Das Tachymeter kann dabei jede der Stellungen 77, 78,79, 80 einnehmen. Desgleichen können die Prismen dabei jede der Stellungen 77,78,79, 80 einnehmen. Das erlaubt diverse Messstrecken, die parallel bzw. auch sich kreuzend verlaufen und deren Ergebnisse zur Kontrolle der Messgenauigkeit miteinander verglichen werden können.

In anderen Ausführungsbeispielen sind auf einzelnen Konsolen oder auf allen Konsolen 76,81,82 nebeneinander Prismen und Tachymeter vorgesehen. Das erlaubt die gleichzeitige Herstellung von parallelen, einschliesslich sich kreuzenden Messstrecken.

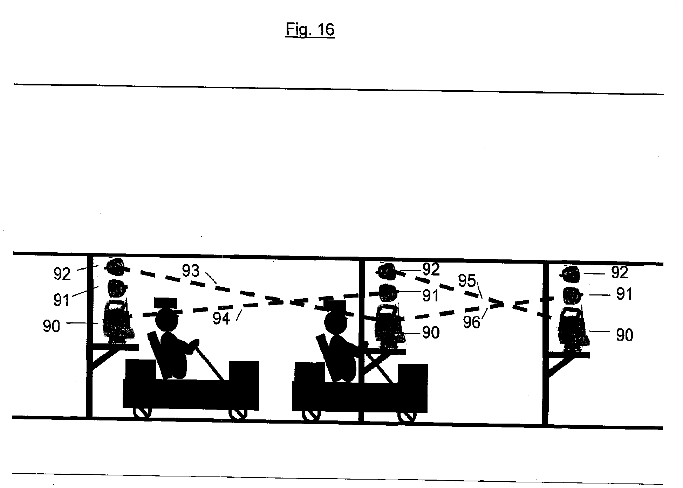

In noch anderen Ausführungsbeispielen werden kombinierte Tachymeter/Prismen auch in der Weise auf Konsolen versetzt, wie das in Fig. 16 dargestellt ist.

Fig. 16 zeigt ein Ausführungsbeispiel, in dem Tachymeter 90 Anwendung finden, die mit zwei senkrecht darüber angeordneten Prismen 91 und 92 kombiniert sind. Mit den Tachymetern 90 werden unterschiedliche Prismen 91 und 92 anvisiert. Dadurch entstehen Messstrahlen 93,94,95,96, die sich kreuzen.

Soweit oben Vermessungsschritte beschrieben worden sind, werden weitere Vermessungsschritte durchgeführt, bis das Ende der Rohrleitung bzw. das Ende des durch die Rohrleitung gebildeten Kanals erreicht ist. Dabei bleibt der in Messrichtung erste Wagen 61 immer zwischen dem in Messrichtung ersten Prisma und dem Tachymeter. Nach einer Messung werden das in Messrichtung erste Prisma und der Tachymeter wieder auf den in Messrichtung ersten Wagen geladen, bevor dieser Wagen in Messrichtung zur nächsten Konsole vorgefahren wird und die Messwerkzeuge wieder auf der Konsole aufgebaut werden.
Der zweite Wagen 61 kann dem ersten Wagen 61 mit dem Prisma 64 folgen, wenn der erste Wagen 61 den Weg zur nächsten Konsole frei gegeben hat.

Insgesamt stellt sich der Messvorgang als schrittweiser Vorgang dar.
Mit jedem Schritt entsteht eine Einzelmessstrecke. Die Einzelmessstrecken bilden zusammen die gesamte Messstrecke. Bei mehreren parallelen Einzelmessstrecken bilden diese zusammen parallele Gesamtmessstrecken. Dabei überlappen sich die Einzelmessstrecken.

Die Vermessung wird im Ausführungsbeispiel darüber hinaus genutzt, um am Ende der Rohrleitung einen Messerschild als Vortriebseinrichtung zu steuern.

In anderen Ausführungsbeispielen mit zwei Wagen 61 beschränkt sich der in Messrichtung erste Wagen auf den Transport des in Messrichtung ersten Messwerkzeuges, während der zweite Wagen 61 den Tachymeter und das in Messrichtung letzte Prisma bewegt.

In noch anderen Ausführungsbeispielen wird ein zusätzlicher Wagen 61 benutzt, so dass bei drei Messwerkzeugen jedem Messwerkzeug ein eigener Wagen zugeordnet werden kann und der Messvorgang beschleunigt werden kann.

In noch anderen Ausführungsbeispielen wird nur ein einziger Wagen verwendet.
Der Wagen wird dabei unter den Konsolen durchbewegt bzw. an den Konsolen vorbei gefahren, um die Messwerkzeuge nach einem Vermessungsschritt einzusammeln und für den nächsten Vermessungsschritt wieder zu verteilen.
Alternativ können die Konsolen eingeschoben werden, um den Wagen vorbeizubewegen.

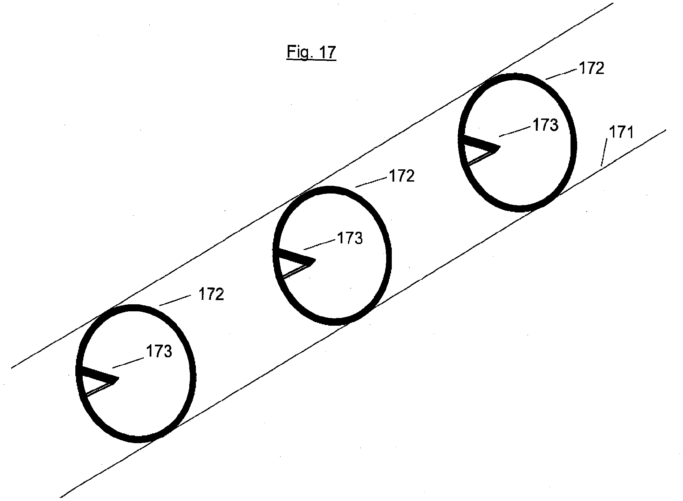

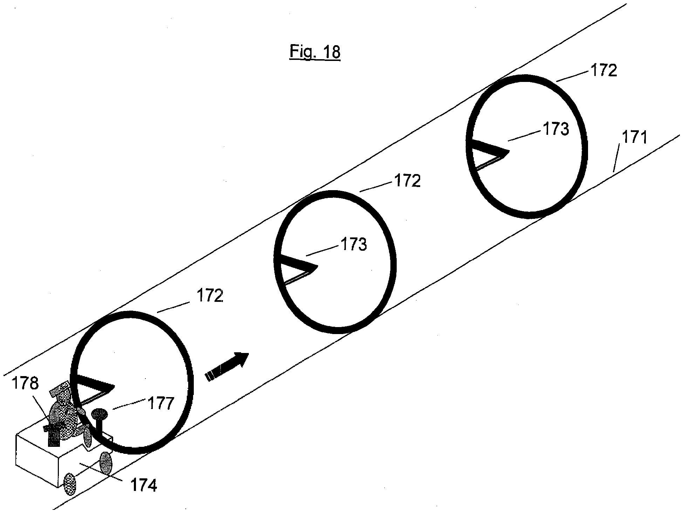

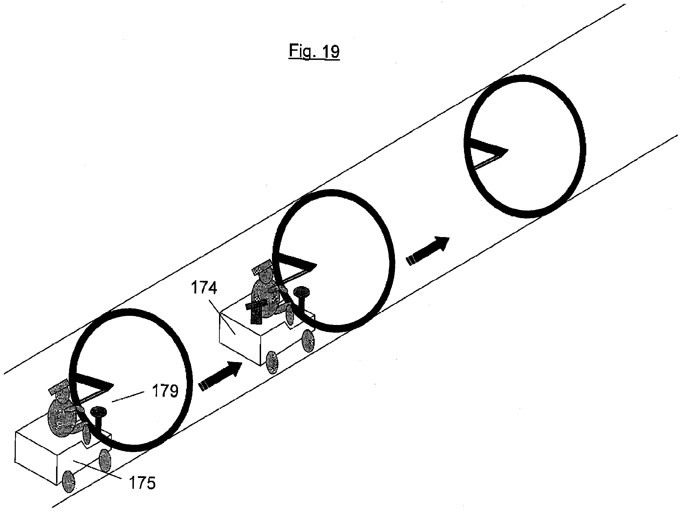

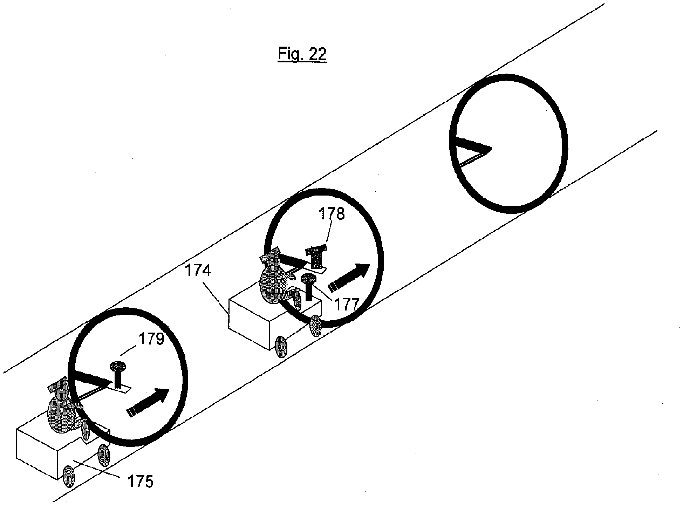

Die Fig.17 ff zeigen ein weiteres Ausführungsbeispiel mit nur zwei Fahrzeugen 174 und 175. In Fig. 17 sind die in jedem Rohrabschnitt eines Kanales 171 vorgesehenen Spannringe mit 172 bezeichnet. Die Spannringe 172 besitzen erfindungsgemässe, ausziehbare Konsolen 173 für die Montage von Messgeräten.
Nach Fig. 18 bewegt sich ein Fahrzeug in der mit Pfeil gekennzeichneten Richtung in den Kanal 171. Das Fahrzeug174 trägt zwei Messgeräte, nämlich ein Tachymeter 178 und ein Prisma 177. Während der Tachymeter 178 in Fahrtrichtung hinten getragen wird, wird das Prisma 177 am Fahrzeug vor getragen.
Dem Fahrzeug 174 folgt im Abstand, wie er in Fig. 19 dargestellt ist, ein weiterer Wagen 175 Der weitere Wagen 175 trägt vorn ein Prisma 179.
Die beiden Wagen 174 und 175 halten im Kanal 171 an, wenn die Fahrzeugführer in Reichweite zu den Konsolen 173 gelangt sind.

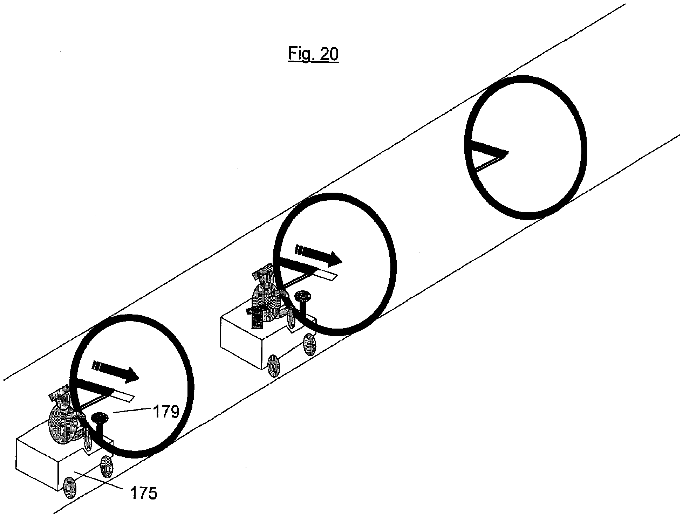

Fig. 20 zeigt, wie die Konsolen nach Anhalten der Fahrzeuge ausgezogen werden. Die Ausziehrichtung ist mit einem Pfeil gekennzeichnet.. Ferner ist die durch Ausziehen entstehende Verlängerung der Konsolen schematisch dargestellt.

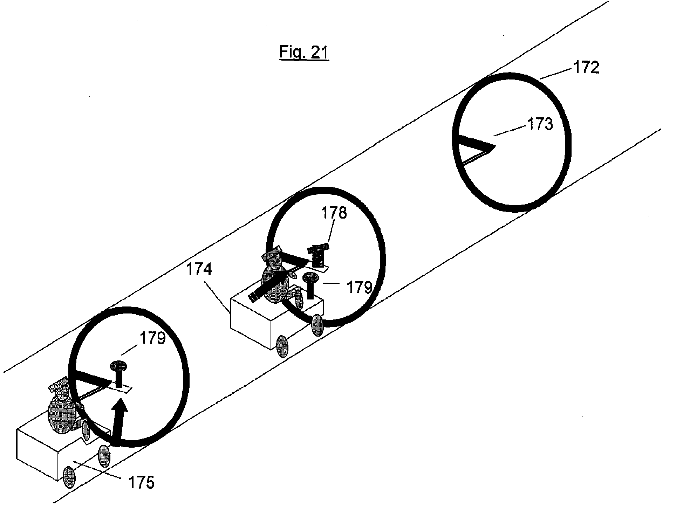

Fig. 21 zeigt, wie nach dem Ausziehen der Konsolen der Tachymeter 178 auf eine Konsole 173 eines in der Ansicht mittleren Spannringes 172 und ein Prisma 179 auf eine Konsole 173 eines in der Ansicht links davon liegenden Spannringes 172 aufgesetzt werden.
Nach Fig. 22 werden die Fahrzeuge 174 und 175 dann in Pfeilrichtung weiterverfahren. Dabei fahren die Fahrzeuge 174 und 175 im Ausführungsbeispiel unter den Konsolen 173 durch. Für die Durchfahrt können die Fahrzeugführer auch die Lehne ihres Sitzes herunterklappen. Die Messgeräte können im Ausführungsbeispiel gleichwohl auf den dafür vorgesehenen Flächen stehen.
Bei grösseren Kanaldurchmessern kann es ausreichend sein, wenn die Fahrzeugführer sich bücken. Oder aber, es ist Raum genug vorhanden, um an den Konsolen 173 seitlich vorbeizufahren. Oder der Raum wird durch seitliches Einschieben der Konsolen vergrössert, so dass die Fahrzeuge mit darauf stehenden Messgeräten vorbeigefahren werden können..
In weiteren Ausführungsbeispielen wird das Fahrzeug 174 an der Konsole vorbeigefahren, bevor der Tachymeter auf die Konsole aufgesetzt wird. Dann entfällt für dieses Fahrzeug die Vorbeifahrt an einer ausgezogen Konsole.

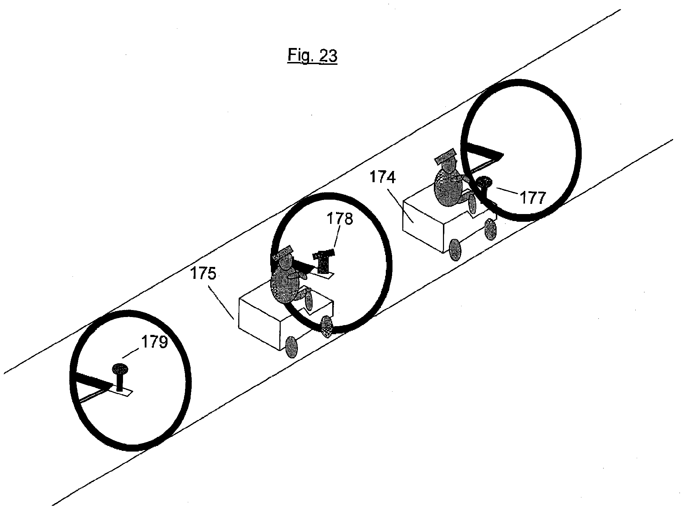

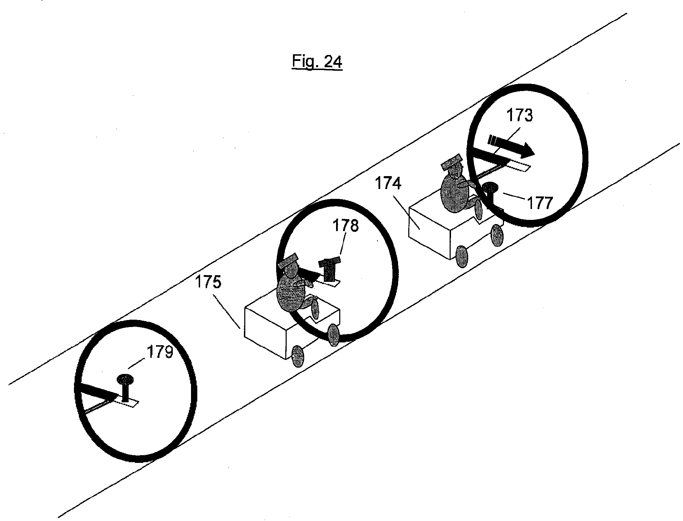

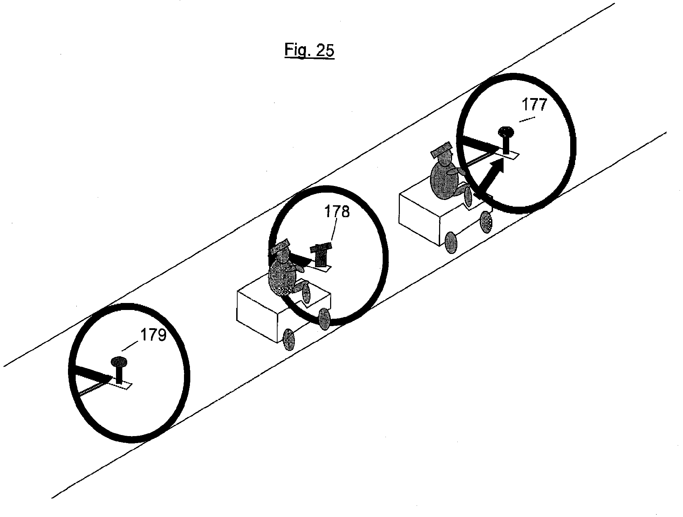

Fig. 23 zeigt die Ankunft des Fahrzeuges 174 an dem benachbarten, in der Ansicht rechten Spannring mit der Konsole 173. Zugleich ist die Ankunft des Fahrzeuges 175 an der in der Ansicht mittleren Konsole 173 mit darauf montiertem Tachymeter 178 dargestellt.
In der Position wird gemäss Fig. 24 die in der Ansicht rechte Konsole 173 ausgezogen. Das dient dazu, das Prisma 177 auf der Konsole zu montieren, wie in Fig. 25 dargestellt.

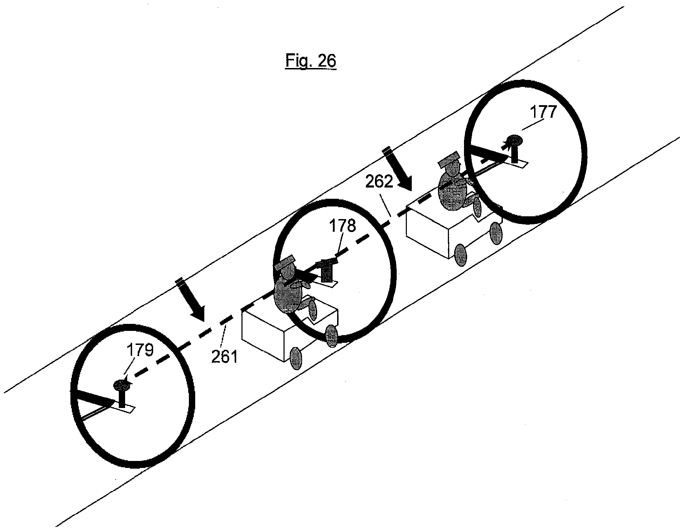

Mit der so vorbereiteten Messstrecke findet eine Vermessung statt, wie in Fig. 26. dargestellt. Dabei sendet der Tachymeter 178 Messstrahlen 261 zu dem Prisma 179, mit denen eine genaue Lage- und Höhenvermessung des Prismas 179 erfolgt. Desgleichen wird die genaue Lage und Höhe des Prismas 177 mit dem Tachymeter 178 mittels Messstrahlen 262 ermittelt.

Nach der Vermessung wird das Prisma 177wieder abgebaut und auf dem Fahrzeug 174 montiert. Dann fährt das Fahrzeug 174 zu dem Tachymeter 178, damit das Tachymeter auch abgebaut und auf dem Fahrzeug 174 montiert werden kann. Auch das Fahrzeug 175 fährt zurück, um das Prisma 179 zu demontieren und auf dem Fahrzeug 175 zu montieren. Die zugehörige Konsole wird eingeschoben.
In anderen Ausführungsbeispielen wird auch erst der Tachymeter 178 mit dem Fahrzeug 174 und danach das Prisma 177 abgebaut. Oder, es wird das Tachymeter 178 mit dem Fahrzeug 175 und danach das Prisma 179 abgebaut. Oder, es wird erst das Prisma 179 mit dem Fahrzeug 175 abgebaut und danach das Tachymeter 178.

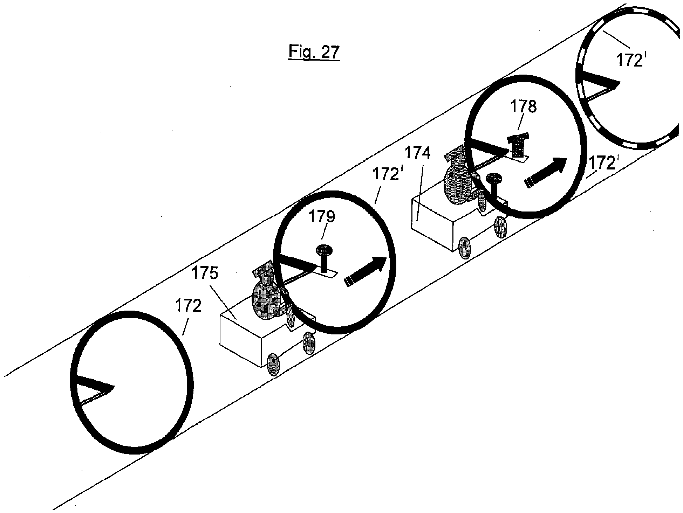

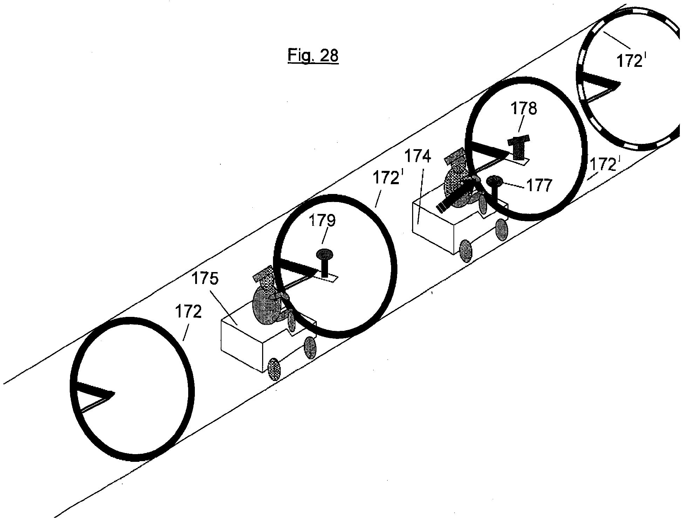

Im Ausführungsbeispiel wird nach dem beschriebenen Vermessungsschritt nach Aufladen der Messgeräte auf die Fahrzeuge ein weiterer Vermessungsschritt begonnen. Der weitere Vermessungsschritt umfasst von den Spannringen des ersten Vermessungsschrittes, den in der Ansicht der Fig. 19 bis 26 mittleren Spannring 172 und den in der Ansicht nach Fig. 19 bis 26 rechten Spannring sowie einen in Fig. 27 und 28 gestrichelt dargestellten weiteren Spannring. Alle Spannringe des weiteren Vermessungsschrittes tragen die Bezeichnung 172'. Anders als bei dem zuvor beschriebenen Vermessungsschritt befinden sich die Fahrzeuge 174 und 175 schon an den ersten beiden Spannringen 172', so dass dort mit dem Aufsetzen des Tachymeters 178 und des Prismas 179 begonnen werden kann, wie in Fig. 21 dargestellt. Anschließend setzen sich die Vorbereitungen für den weiteren Vermessungsschritt fort, wie in Fig. 22 bis 28 beschrieben.

Für den weiteren Vermessungsschritt werden zwei vermessene und damit gesicherte Messpunkte aus dem zuvor beschriebenen Vermessungsschritt genutzt, um von dort aus einen weiteren Messpunkt (Prisma auf Konsole des gestrichelt dargestellten Spannringes im Kanal) zu vermessen.
Die beiden beschriebenen Vermessungsschritte überlappen sich demzufolge in zwei Messpunkten.

## Patentansprüche

1. Verfahren zur Vermessung für unterirdische Bauwerke wie Tunnel, Kanäle, Bergwerksstrecken, Unterführungen,
wobei wahlweise ein Rohrvortrieb oder ein Tübbingausbau stattfindet, insbesondere für die Vortriebssteuerung bei der Bauwerkserstellung oder zum Nachvermessen,
wobei der Ausbau ortsfest erstellt wird oder mit dem Vortrieb durch den
Untergrund bewegt wird und
wobei die Bauwerke und/oder die Position der Vortriebseinrichtung
vermessen werden, **dadurch gekennzeichnet,**
**dass**
mindestens ein Tachymeter (30, 60, 90, 151, 178) und mehrere Prismen (63, 64, 91, 92, 177, 179) als Messwerkzeuge verwendet werden,
wobei die Messwerkzeuge auf mehreren Konsolen (57, 76, 81, 82, 152, 153, 173) im Bauwerk aufgestellt werden, die den Messwerkzeugen eine definierte Messstellung geben,
wobei die Konsolen (57, 76, 81, 82, 152, 153, 173) im Bauwerk verstellbar sind, aber für mehr als einen Vermessungsschritt bleibend angeordnet werden,
wobei zu einem Ziel hin schrittweise Messstrecken erzeugt werden und bei jedem Vermessungsschritt mit dem Tachymeter(30, 60, 90, 151, 178) die Position der anderen Messwerkzeuge vermessen wird,
und die Messwerkzeuge bei jedem Vermessungsschritt auf drei oder mehr Konsolen (57, 76, 81, 82, 152, 153, 173) aufgestellt sind,
wobei alle Meßwerkzeuge für den nächsten Vermessungsschritt um eine weitere Konsole (57, 76, 81, 82, 152, 153,173) gemeinsam verstellt werden, so dass alle Messwerkzeuge (30, 60, 90, 151, 178, 63, 64 91, 92, 177, 179) den bisherigen Aufstellungsort auf den Konsolen (57, 76, 81 82, 152, 153, 173) verlassen um in gleicher Folge auf einer anderen Konsole (57, 76, 81, 82, 152, 153, 173) aufgestellt zu werden und die verschiedenen Vermessungsschritte sich überlappen,
wobei die einzelnen sich überlappenden Vermessungsschritte sich zu einer Gesamt-Messstrecke ergänzen.

2. Verfahren nach Anspruch 1, **dadurch gekennzeichnet, daß** die Konsolen (57, 76, 81, 82, 152, 153, 173) mehrere Messstellungen aufweisen und dass im Anschluss an eine Vermessung in einer Messstellung noch weitere Vermessungen in demselben Bauwerksabschnitt erfolge, so dass Messstrecken entstehen, die parallel zu der ersten Messstrecke und/oder hin- und hergehend verlaufen und/oder einander kreuzen.

3. Verfahren nach Anspruch 1 oder 2, **dadurch gekennzeichnet, daß** die Konsolen(57, 76, 81, 82, 152, 153, 173) aus ineinanderschiebbaren und auseinanderziehbaren Profilen bestehen

4. Verfahren nach Anspruch 1 oder 2, **dadurch gekennzeichnet, daß** die Konsolen(57, 76, 81, 82, 152, 153, 173) schwenkbar oder drehbar angeordnet sind.

5. Verfahren nach einem der Ansprüche 1 bis 4, **dadurch gekennzeichnet, dass** die Konsolen(57, 76, 81, 82, 152, 153, 173) zumindest in der Messstellung arretierbar sind.

6. Verfahren nach Anspruch 5, **dadurch gekennzeichnet, dass** die Konsolen (57, 76, 81, 82, 152, 153,173) in einer weiteren Stellung arretierbar sind, deren Abstand von der Bauwerkswand geringer als der Abstand der Meßstellung von der Bauwerkswand ist.

7. Verfahren nach Anspruch 6, **dadurch gekennzeichnet, dass** die weitere Stellung die der Bauwerkswand nächste Stellung ist.

8. Verfahren nach einem der Ansprüche 1 bis 7, **dadurch gekennzeichnet, dass** die Konsolen(57, 76, 81, 82, 152, 153, 173) mehr als eine Messstellung aufweisen

9. Verfahren nach einem der Ansprüche 1 bis 8, **dadurch gekennzeichnet, daß** die Konsolen, zur Arretierung mit einer Klemmvorrichtung und/oder einer Raste versehen sind.

10. Verfahren nach einem der Ansprüche 1 bis 9, **dadurch gekennzeichnet, dass** die Konsolen(57, 76, 81, 82, 152, 153, 173) mit mindestens einer Arretierungs- und Klemmschraube versehen sind.

11. Verfahren nach Anspruch 10, **dadurch gekennzeichnet, dass** die Konsolen ineinander schiebbar und ausziehbar sind und dass eines der Konsolenteile einen Schlitz für die Arretierungs- und Klemmschraube aufweist.

12. Verfahren nach einem der Ansprüche 1 bis 11, **dadurch gekennzeichnet, daß** die Arretierungsschrauben Schrauben und/oder Schraubenmuttern umfassen, die als Hebel ausgebildet sind.

13. Verfahren nach einem der Ansprüche 1 bis 12, **dadurch gekennzeichnet, daß** die Konsolen (57, 76, 81, 82, 152, 153, 173) verstellbar sind mit einer Raste, wobei zu der Raste ein federnder Haken in einem Konsolenteil und eine Ausnehmung in dem korrespondierenden Konsolenteil gehören.

14. Verfahren nach einem der Ansprüche 1 bis 13, **dadurch gekennzeichnet, daß** die Konsolen (57, 76, 81, 82, 152, 153, 173) in der Messstellung mindestens einen Abstand von 20 bis 70 cm, vorzugsweise von 30 bis 60cm von der Bauwerkswand aufweisen.

15. Verfahren nach einem der Ansprüche 2 bis 14, **dadurch gekennzeichnet, dass** die Messgeräte zur Herstellung paralleler Messstrecken auf unterschiedliche Messstellen der Konsolen (57, 76, 81, 82, 152, 153, 173) aufgesetzt werden.

16. Verfahren nach einem der Ansprüche 2 bis 15, **dadurch gekennzeichnet, dass** mehr als ein Messgerät auf jeder Konsole (57, 76, 81, 82, 152, 153, 173) aufgestellt wird.

17. Verfahren nach Anspruch 16, **dadurch gekennzeichnet, dass** die verschiedenen Messgeräte nebeneinander auf den Konsolen (57, 76, 81, 82, 152, 153, 173) aufgestellt werden.

18. Verfahren nach Anspruch 16 oder 17, **dadurch gekennzeichnet, dass** die Messgeräte auf den Konsolen (57, 76, 81, 82, 152, 153, 173) übereinander angeordnet sind.

19. Verfahren nach einem der Ansprüche 1 bis 18, **dadurch gekennzeichnet, daß** die Konsolen (57, 76, 81, 82, 152, 153, 173) mittels lösbarer Ringe oder mittels lösbarer Ringabschnitte in den Bauwerksquerschnitten eines rohrförmigen Bauwerkes erfolgt, wobei die lösbaren Ringe oder Ringabschnitte der Rohrform des Bauwerkes angepasst sind.

20. Verfahren nach Anspruch 19, **gekennzeichnet durch** eine Demontage der Konsolen (57, 76, 81, 82, 152, 153, 173) und Ringe oder Ringabschnitte nach Fertigstellung des Bauwerkes.

21. Verfahren nach Anspruch 19 oder 20, **dadurch gekennzeichnet, daß** die Ringe aufspreizbar sind.

22. Verfahren nach Anspruch 21, **gekennzeichnet durch** die Verwendung einer oder mehrerer Schnellspanneinrichtungen zum Aufspannen der Ringe.

23. Verfahren nach einem der Ansprüche 1 bis 22, **gekennzeichnet durch** die Verwendung von mindestens zwei verfahrbaren Vorrichtungen für den Transport von drei und mehr Messwerkzeugen.

24. Verfahren nach Anspruch 23, **gekennzeichnet durch** die Verwendung von genauso viel verfahrbaren Vorrichtungen wie Messwerkzeugen.

25. Verfahren nach einem der Ansprüche 1 bis 24, **dadurch gekennzeichnet, dass** das Bauwerk beim Nachmessen auf der ganzen Länge neu vermessen wird.

26. Verfahren nach einem der Ansprüche 1 bis 25, **gekennzeichnet durch** eine Vermessung des Bauwerkes beim Vortrieb und eine anschliessende Vermessung des Bauwerkes in umgekehrter Richtung und einen Vergleich beider Messwerte.

27. Verfahren nach einem der Ansprüche 1 bis 26, **dadurch gekennzeichnet, dass** sie durchgeführt wird durch Vermessungsleute, die mit einem Fahrzeug von einer Messstelle zur anderen fahren.

28. Verfahren nach einem der Ansprüche 1 bis 27, **gekennzeichnet durch** Verwendung eines Fahrzeuges mit elektrischem, batteriegetriebenen Antrieb zum Personen- und Materialtransport von Messstelle zu Messstelle.

29. Verfahren nach einem der Ansprüche 23 bis 28, **dadurch gekennzeichnet, daß** das Fahrzeug oder die verfahrbare Vorrichtung lenkfähig oder gleisgebunden ist.

30. Verfahren nach Anspruch 29, **dadurch gekennzeichnet, daß** das lenkfähige Fahrzeug zwei Lenkungen aufweist, eine Vorwärtslenkung und eine Rückwärtslenkung

31. Verfahren nach Anspruch 30, **dadurch gekennzeichnet, daß** die Lenkung des Fahrzeuges von der Vorwärtslenkung auf Rückwartslenkung drehbar ist.

32. Verfahren nach einem der Ansprüche 23 bis 31, **gekennzeichnet durch** eine Hebelsteuerung für mindestens zwei Fahrzeug-Funktionen, vorzugsweise für die Lenkung und die Vorwärts- und Rückwärtsfahrt, noch weiter bevorzugt für die Lenkung. Vorwärts- und Rückwärtsfahrt.

33. Verfahren nach einem der Ansprüche 23 bis 32, **dadurch gekennzeichnet, daß** das Fahrzeug oder die verfahrbare Vorrichtung einen bei Umstellung von der Vorwärtsfahrt auf die Rückwärtsfahrt umstellbaren Sitz aufweist.

34. Verfahren nach Anspruch 33, **dadurch gekennzeichnet, daß** der Sitz durch Umklappen oder Drehen umstellbar ist.

35. Verfahren nach einem der Ansprüche 32 bis 34, **dadurch gekennzeichnet, daß** ein Drehgestell die Lenkung und/oder den Sitz trägt.

36. Verfahren nach einem der Ansprüche 23 bis 35, **dadurch gekennzeichnet, daß** das Fahrzeug dreirädrig oder vierrädrig ist und/oder die Lenkung eine Lenkstange aufweist und/oder Ösen am Fahrzeugrahmen zum Anschlagen von Hubgeschirren angebracht sind.

37. Verfahren nach einem der Ansprüche 1 bis 36, **dadurch gekennzeichnet, daß** die Tachymeter (30, 60, 90, 151, 178) zugleich als Prismengeräte ausgebildet sind.

38. Verfahren nach einem der Ansprüche 1 bis 37, **dadurch gekennzeichnet, dass** ein Tachymeter (30, 60, 90, 151, 178) und Prismen (54, 63, 91, 92, 177, 179) als Messwerkzeuge verwendet werden, wobei in Messrichtung vor und hinter dem Tachymeter (30, 60, 90, 151, 178) ein Prisma (54, 63, 91, 92, 177, 179) vorgesehen ist.

39. Verfahren nach einem der Ansprüche 1 bis 38, **dadurch gekennzeichnet, dass** jedes Messwerkzeug auf einer separaten Konsole(57, 76, 81, 82, 152, 53, 173) für einen Vermessungsschritt aufgestellt und bis auf mindestens ein Überlappungsmesswerkzeug alle Messwerke zum nächsten Vermessungsschritt demontiert und auf der in Messrichtung nächsten freien Konsole (57, 76, 81, 82, 152, 153, 173) wieder aufgestellt werden, wobei die mit Messwerkzeugen versehenen Konsolen (57, 76, 81, 82, 152, 153, 173) den Vermessungsschritt definieren.

40. Verfahren nach Anspruch 39, dadurch gekennnzeichnet, dass als Messwerkzeug mindestens ein Tachymeter (30, 60, 90, 151, 178) und ein Prisma (54, 63, 91, 92, 177, 179) verwendet werden.

41. Verfahren nach einem der Ansprüche 1 bis 40, **dadurch gekennzeichnet, daß** zusätzlich zu den mit Konsolen(57, 76, 81, 82, 152, 153, 173) gehaltenen Prismen (54, 63, 91, 92, 177, 179) im Bauwerk verklebte Prismen (54, 63, 91, 92, 177, 179) für die Vermessung verwendet werden.

42. Verfahren nach einem der Ansprüche 1 bis 41, **dadurch gekennzeichnet, daß** zusätzlich zu den mit Konsolen (57, 76, 81, 82, 152, 153, 173) gehaltenen Prismen (54,X 63, 91, 92, 177, 179) im Bauwerk mit Magneten gehaltene Prismen (54, 63, 91, 92, 177, 179) verwendet werden.

43. Verfahren nach Anspruch 42, **gekennzeichnet durch** Verwendung von Halterungen, die ganz oder teilweise aus einem auf Magneten reagierenden Material bestehen.

44. Verfahren nach Anspruch 43, **gekennzeichnet durch** die Verwendung von Stahlblechen als Halterung.

45. Verfahren nach Anspruch 43 oder 44, **gekennzeichnet durch** die Verwendung von Halterungen, die am Bauwerk verklebt sind.

46. Verfahren nach Anspruch 45, **gekennzeichnet durch** Verwendung einer lösbaren Verklebung der Halterung.

47. Verfahren nach einem der Ansprüche 42 bis 46, **gekennzeichnet durch** die Verwendung von Halterungen aus Stahlblech mit einer Dicke von kleiner/gleich 0,5mm, vorzugsweise kleiner/gleich 0,4mm und noch weiter bevorzugt kleiner/gleich 0,3mm.

48. Verfahren nach einem der Ansprüche 42 bis 47, **gekennzeichnet durch** die Verwendung von Halterungen aus Stahlblech mit einer Breite von kleiner/gleich 0,3m, vorzugsweise von kleiner/gleich 0,2m und höchst bevorzugt von kleiner/gleich 0,1 m

49. Verfahren nach einem der Ansprüche 42 bis 48, **gekennzeichnet durch** die Verwendung von Halterungen aus Stahlblech mit einer Länge kleiner/gleich 0,5m, vorzugsweise von kleiner/gleich 0,4m und höchst bevorzugt von 0,3m.

50. Verfahren nach einem der Ansprüche 44 bis 49, **gekennzeichnet durch** die Verlegung der Stahlbleche in Längsrichtung des Bauwerkes.

51. Verfahren nach einem der Ansprüche 41 bis 50, **gekennzeichnet durch** die Verwendung von mehreren Prismen (54, 63, 91, 92, 177, 179) in mindestens einer Gruppe an einer Vermessungsstelle.

52. Verfahren nach Anspruch 51, **gekennzeichnet durch** die Verwendung von mehreren Gruppen von Prismen (54, 63, 91, 92, 177, 179).

53. Verfahren nach einem der Ansprüche 41 bis 52*,* **gekennzeichnet durch** die Verwendung von Prismen(54, 63, 91, 92, 177, 179), die an der Unterseite mit einem beidseitig klebrigen Klebeband(Doppelklebeband) versehen sind, wobei das Klebeband mit einer Seite auf der Unterseite der Prismen (54, 63, 91, 92, 177, 179) angebracht wird und an der anderen Seite mit einer Abdeckung versehen ist, die vor dem Verkleben der Prismen (54, 63, 91, 92, 177, 179) entfernt wird.

54. Verfahren nach einem der Ansprüche 41 bis 52, **gekennzeichnet durch** die Verwendung von Halterungen für die Prismen(54, 63, 91, 92, 177, 179), die an der Unterseite mit einem beidseitig klebrigen Klebeband(Doppelklebeband) versehen sind, wobei das Klebeband mit einer Seite auf der Unterseite der Halterung angebracht wird und an der anderen Seite mit einer Abdeckung versehen ist, die vor dem Verkleben der Prismen (54, 63, 91, 92, 177, 179) entfernt wird.

55. Verfahren einem der Ansprüche 41 bis 54, **gekennzeichnet durch** die Verwendung von Klebebandabschnitten oder auswechselbarem Klebeband oder Klebeband mit einer Abzuglasche.

## Claims

1. Method for surveying underground construction sites such as tunnels, sewers, mine galleries, subways,
wherein optionally pipe jacking or tubbing is taking place, in particular for the heading control in the construction work or for re-surveying,
wherein the construction occurs at a fixed location or is moved with the pipe jack through the subsurface and
wherein the construction and/or the position of the pipe jack equipment are surveyed,
**characterised in that**,
at least one tacheometer (30, 60, 90, 151, 178) and a plurality of prisms (63, 64, 91, 92, 177, 179) are used as the measuring tools,
wherein the measuring tools are positioned in the construction site on a plurality of brackets (57, 76, 81, 82, 152, 153, 173) that give a defined measurement position to the measuring tools, wherein the brackets (57, 76, 81, 82, 152, 153, 173) are adjustable in the construction site, but are fixedly positioned for more than one survey step,
wherein measurement segments toward a target are produced stepwise and the position of the other measuring tools is surveyed at each survey step with the tacheometer (30, 60, 90, 151, 178),
and in each survey step the measuring tools are positioned on three or more brackets (57, 76, 81, 82, 152, 153, 173),
wherein all measuring tools for the next survey step are adjusted together about an additional bracket (57, 76, 81, 82, 152, 153,173), such that all measuring tools (30, 60, 90, 151, 178, 63, 64, 91, 92, 177, 179) are left at the preceding location on the brackets (57, 76, 81, 82, 152, 153, 173), in order to be placed in the same sequence on another bracket (57, 76, 81, 82, 152, 153, 173) and the various survey steps overlap one another, wherein the individual, overlapping survey steps supplement each other to form a complete measurement segment.

2. Method according to claim 1, **characterised in that** the brackets (57, 76, 81, 82, 152, 153, 173) possess a plurality of measurement positions and that at the conclusion of a survey in one measurement position, still more surveys are carried out in the same construction site section, such that measurement segments result that are parallel to the first measurement segment and/or run to and fro and/or cross one another.

3. Method according to claim 1 or 2, **characterised in that** the brackets (57, 76, 81, 82, 152, 153, 173) consist of telescopic profiles.

4. Method according to claim 1 or 2, **characterised in that** the brackets (57, 76, 81, 82, 152, 153, 173) are pivotably or rotatably arranged.

5. Method according to one of claims 1 to 4, **characterised in that** the brackets (57, 76, 81, 82, 152, 153, 173) are lockable, at least in the measuring position.

6. Method according to claim 5, **characterised in that** the brackets (57, 76, 81, 82, 152, 153, 173) are lockable in another position, whose distance from the construction site wall is less than the distance of the measuring position from the construction site wall.

7. Method according to claim 6, **characterised in that** the another position is the next location of the construction site wall.

8. Method according to one of claims 1 to 7, **characterised in that** the brackets (57, 76, 81, 82, 152, 153, 173) possess more than one measuring position.

9. Method according to one of claims 1 to 8, **characterised in that** the brackets are equipped with a clamping device and/or a notch for the locking.

10. Method according to one of claims 1 to 9, **characterised in that** the brackets (57, 76, 81, 82, 152, 153, 173) are equipped with at least one locking and clamping screw.

11. Method according to claim 10, **characterised in that** the brackets are telescopic and that one of the bracket parts possesses a slot for the locking and clamping screw.

12. Method according to one of claims 1 to 11, **characterised in that** the locking screws comprise screws and/or screw nuts, which are designed as a lever.

13. Method according to one of claims 1 to 12, **characterised in that** the brackets (57, 76, 81, 82, 152, 153, 173) are adjustable with a notch, wherein a sprung hook in a bracket part and a recess in the corresponding bracket part belong to the notch.

14. Method according to one of claims 1 to 13, **characterised in that** the brackets (57, 76, 81, 82, 152, 153, 173) in the measuring position are at a distance of at least 20 to 70 cm, preferably 30 to 60 cm from the construction site wall.

15. Method according to one of claims 2 to 14, **characterised in that** the measuring instruments for producing the parallel measurement paths are mounted on different measuring positions of the brackets (57, 76, 81, 82, 152, 153, 173).

16. Method according to one of claims 2 to 15, **characterised in that** more than one measuring device is placed on each bracket (57, 76, 81, 82, 152, 153, 173).

17. Method according to claim 16, **characterised in that** the various measuring devices are placed beside one another on the brackets (57, 76, 81, 82, 152, 153, 173).

18. Method according to claim 16 or 17, **characterised in that** the measuring devices are arranged above one another on the brackets (57, 76, 81, 82, 152, 153, 173).

19. Method according to one of claims 1 to 18, **characterised in that** the brackets (57, 76, 81, 82, 152, 153, 173) are fixed by means of detachable rings or by means of detachable ring sections in the construction site cross sections of a tubular construction site,
wherein the detachable rings or ring sections are matched to the tube shape of the construction site.

20. Method according to claim 19, **characterised by** dismantling the brackets (57, 76, 81, 82, 152, 153, 173) and rings or ring sections after the construction site has been completed.

21. Method according to claim 19 or 20, **characterised in that** the rings are splayable.

22. Method according to claim 21, **characterised by** the use of one or more quick-acting clamping devices to clamp the rings.

23. Method according to one of claims 1 to 22, **characterised by** the use of at least two mobile devices for transporting three and more measuring tools.

24. Method according to claim 23, **characterised by** the use of exactly the same number of mobile devices as there are measuring tools.

25. Method according to one of claims 1 to 24, **characterised in that** the construction site when re-surveyed is surveyed again over the total length.

26. Method according to one of claims 1 to 25, **characterised by** a survey of the construction site when pipe-jacking and a subsequent survey of the construction site in the opposite direction and the measured values of both are compared.

27. Method according to one of claims 1 to 26, **characterised in that** it is carried out by surveying personnel who drive with a vehicle from one measuring point to the others.

28. Method according to one of claims 1 to 27, **characterised by** the use of a vehicle with an electric, battery-driven drive for transporting people and material from measuring point to measuring point.

29. Method according to one of claims 23 to 28, **characterised in that** the vehicle or the mobile device is steerable or track-bound.

30. Method according to claim 29, **characterised in that** the steerable vehicle has two steering systems, a forward steering and a backward steering.

31. Method according to claim 30, **characterised in that** the steering of the vehicle is pivotable from forward steering to backward steering.

32. Method according to one of claims 23 to 31, **characterised by** a lever control for at least two vehicle functions, preferably for the steering and for driving forwards and backwards, even more preferably for the steering for driving forwards and backwards.

33. Method according to one of claims 23 to 32, **characterised in that** the vehicle or the mobile device possesses a repositionable seat when changing from driving forward to driving backward.

34. Method according to claim 33, **characterised in that** the seat is repositionable by folding or rotating.

35. Method according to one of claims 32 to 34, **characterised in that** a pivot mounting supports the steering and/or the seat.

36. Method according to one of claims 23 to 35, **characterised in that** the vehicle is three-wheeled or four-wheeled and/or the steering possesses a steering link and/or eyelets are fixed on the vehicle frame for attaching lifting harnesses.

37. Method according to one of claims 1 to 36, **characterised in that** the tacheometer (30, 60, 90, 151, 178) is simultaneously designed as the prism devices.

38. Method according to one of claims 1 to 36, **characterised in that** a tacheometer (30, 60, 90, 151, 178) and prisms (54, 63, 91, 92, 177, 179) are used as the measuring tools, wherein a prism (54, 63, 91, 92, 177, 179) is provided in front of and behind the tacheometer (30, 60, 90, 151, 178) in the measurement direction.

39. Method according to one of claims 1 to 38, **characterised in that** for a survey step each measuring tool is mounted on a separate bracket (57, 76, 81, 82, 152, 53, 173) and except for at least one overlapping measuring tool all measuring elements are dismounted for the next survey step and are re-mounted on the next free bracket (57, 76, 81, 82, 152, 153, 173) in the direction of measurement, wherein the survey step is defined by the brackets (57, 76, 81, 82, 152, 153, 173) equipped with measuring tools.

40. Method according to claim 39, **characterised in that** at least one tacheometer (30, 60, 90, 151, 178) and one prism (54, 63, 91, 92, 177, 179) are used as the measuring tool.

41. Method according to one of claims 1 to 40, **characterised in that** in addition to the prisms (54, 63, 91, 92, 177, 179) held with brackets (57, 76, 81, 82, 152, 153, 173), adhesively bonded prisms (54, 63, 91, 92, 177, 179) are used for surveying in the construction site.

42. Method according to one of claims 1 to 41, **characterised in that** in addition to the prisms (54, 63, 91, 92, 177, 179) held with brackets (57, 76, 81, 82, 152, 153, 173), magnetically held prisms (54, 63, 91, 92, 177, 179) are used for surveying in the construction site.

43. Method according to claim 42, **characterised by** the use of supports that consist wholly or partially of a material that is attracted to magnets.

44. Method according to claim 43, **characterised by** the use of steel sheets as the support.

45. Method according to claim 43 or 44, **characterised by** the use of supports that are adhesively bonded to the construction site.

46. Method according to claim 45, **characterised by** the use of a detachable adhesion of the support.

47. Method according to one of claims 42 to 46, **characterised by** the use of supports made of steel sheet with a thickness of less than/equal to 0.5 mm, preferably less than/equal to 0.4 mm and still more preferably less than/equal to 0.3 mm.

48. Method according to one of claims 42 to 47, **characterised by** the use of supports made of steel sheets with a width of less than/equal to 0.3m, preferably less than/equal to 0.2m and most preferably less than/equal to 0.1m.

49. Method according to one of claims 42 to 48, **characterised by** the use of supports made of steel sheets with a length of less than/equal to 0.5m, preferably less than/equal to 0.4m and most preferably of 0.3m.

50. Method according to one of claims 44 to 49, **characterised by** laying the steel sheets in the longitudinal direction of the construction site.

51. Method according to one of claims 41 to 50, **characterised by** the use of a plurality of prisms (54, 63, 91, 92, 177, 179) in at least one group at a survey point.

52. Method according to claim 51, **characterised by** the use of a plurality of groups of prisms (54, 63, 91, 92, 177, 179).

53. Method according to one of claims 41 to 52, **characterised by** the use of prisms (54, 63, 91, 92, 177, 179) that are furnished on the lower side with an adhesive tape that is adhesive on both sides (double-sided adhesive tape), wherein the adhesive tape is attached with one side on the lower surface of the prisms (54, 63, 91, 92, 177, 179) and the other side is provided with a backing material that is removed prior to adhesively bonding the prisms (54, 63, 91, 92, 177, 179).

54. Method according to one of claims 41 to 52, **characterised by** the use of supports for the prisms (54, 63, 91, 92, 177, 179), said supports being furnished on the lower side with an adhesive tape that is adhesive on both sides (double-sided adhesive tape), wherein the adhesive tape is attached with one side on the lower surface of the support and the other side is provided with a backing material that is removed prior to adhesively bonding the prisms (54, 63, 91, 92, 177, 179).

55. Method according to one of claims 41 to 54, **characterised by** the use of strips of adhesive tape or replaceable adhesive tape or adhesive tape with a pull-tab.

## Revendications

1. Procédé pour le mesurage pour des constructions souterraines comme des tunnels, canaux, galeries de mines, passages souterrains, avec au choix un fonçage ou un cuvelage, en particulier pour la commande d'avancement lors de la réalisation de construction ou afin de refaire des mesures, l'aménagement se produisant de manière fixe sur place ou étant mobile avec l'avancement à travers le sous-sol et les constructions et/ou la position du dispositif d'avancement étant mesuré(e)s, **caractérisé en ce qu'**au moins un tachymètre (30, 60, 90, 151, 178) et plusieurs prismes (63, 64, 91, 92, 177, 179) sont utilisés en tant qu'outils de mesure, les outils de mesure étant posés sur plusieurs consoles (57, 76, 81, 82, 152, 153, 173) dans la construction, qui fournissent aux outils de mesure une position de mesure définie, les consoles (57, 76, 81, 82, 152, 153, 173) pouvant être réglées dans la construction, mais étant disposées de manière permanente pour plus d'une étape de mesurage, des sections de mesure étant créées par étape jusqu'à une cible et pour chaque étape de mesurage avec le tachymètre (30, 60, 90, 151, 178) la position des autres outils de mesure étant mesurée, et les outils de mesure étant à l'occasion de chaque étape de mesurage posés sur trois ou plusieurs consoles (57, 76, 81, 82, 152, 153, 173), tous les outils de mesure étant réglés ensemble pour l'étape de mesurage suivante autour d'une autre console (57, 76, 81, 82, 152, 153, 173) de sorte que tous les outils de mesure (30, 60, 90, 151, 178, 63, 64, 91, 92, 177, 179) quittent l'endroit de pose précédent sur les consoles (57, 76, 81, 82, 152, 153, 173) pour être posés dans la même séquence sur une autre console (57, 76, 81, 82, 152, 153, 173) et les différentes étapes de mesurage se chevauchent, chacune des étapes de mesurage se chevauchant, se complétant pour devenir une section de mesure entière.

2. Procédé selon la revendication 1, **caractérisé en ce que** les consoles (57, 76, 81, 82, 152, 153, 173) présentent plusieurs endroits de mesure et **en ce qu'**à la suite d'un mesurage, dans un endroit de mesure, encore d'autres mesurages sont effectués dans la même section de la construction, de sorte que se créent des sections de mesure, qui sont parallèles à la première section de mesure et/ou vont et viennent et/ou se croisent.

3. Procédé selon la revendication 1 ou 2, **caractérisé en ce que** les consoles (57, 76, 81, 82, 152, 153, 173) sont composées de profilés pouvant se déployer et s'insérer les uns dans les autres.

4. Procédé selon la revendication 1 ou 2, **caractérisé en ce que** les consoles (57, 76, 81, 82, 152, 153, 173) sont disposées de manière pivotante ou tournante.

5. Procédé selon l'une des revendications 1 à 4, **caractérisé en ce que** les consoles (57, 76, 81, 82, 152, 153, 173) peuvent être bloquées au moins dans la position de mesure.

6. Procédé selon la revendication 5, **caractérisé en ce que** les consoles (57, 76, 81, 82, 152, 153, 173) peuvent être bloquées dans une autre position, dont l'espacement de fa paroi de la construction est inférieur à l'espacement de la position de mesure de la paroi de la construction.

7. Procédé selon la revendication 6, **caractérisé en ce que** l'autre position est la position suivante de la paroi de la construction.

8. Procédé selon l'une des revendications 1 à 7, **caractérisé en ce que** les consoles (57, 76, 81, 82, 152, 153, 173) présentent plus d'une position de mesure.

9. Procédé selon l'une des revendications 1 à 8, **caractérisé en ce que** les consoles sont équipées, pour blocage, d'un dispositif de serrage et/ou d'un enclenchement.

10. Procédé selon l'une des revendications 1 à 9, **caractérisé en ce que** les consoles (57, 76, 81, 82, 152, 153, 173) sont équipées d'au moins une vis de serrage et de blocage.

11. Procédé selon la revendication 10, **caractérisé en ce que** les consoles peuvent se déployer et s'insérer les unes dans les autres et **en ce qu'**une des parties de la console présente une fente pour la vis de serrage et de blocage.

12. Procédé selon l'une des revendications 1 à 11, **caractérisé en ce que** les vis de blocage comprennent des vis et/ou des écrous, qui sont réalisés en tant que levier.

13. Procédé selon l'une des revendications 1 à 12, **caractérisé en ce que** les consoles (57, 76, 81, 82, 152, 153, 173) peuvent être réglées avec un enclenchement, un crochet à ressort dans une partie de la console et un évidement dans la partie de la console correspondante appartenant à l'enclenchement.

14. Procédé selon l'une des revendications 1 à 13, **caractérisé en ce que** les consoles (57, 76, 81, 82, 152, 153, 173) présentent dans la position de mesure au moins un espacement de 20 à 70 cm, de préférence de 30 à 60 cm de la paroi de la construction.

15. Procédé selon l'une des revendications 2 à 14, **caractérisé en ce que** les appareils de mesure pour créer des sections de mesure parallèles sont posés sur différents endroits de mesure des consoles (57, 76, 81, 82, 152, 153, 173).

16. Procédé selon l'une des revendications 2 à 15, **caractérisé en ce que** plus d'un appareil de mesure est placé sur chaque console (57, 76, 81, 82, 152, 153, 173).

17. Procédé selon la revendication 16, **caractérisé en ce que** les différents appareils de mesure sont placés les uns à côté des autres sur les consoles (57, 76, 81, 82, 152, 153, 173).

18. Procédé selon la revendication 16 ou 17, **caractérisé en ce que** les appareils de mesure sont disposés superposés sur les consoles (57, 76, 81, 82, 152, 153, 173).

19. Procédé selon l'une des revendications 1 à 18, **caractérisé en ce que** l'on réalise les consoles (57, 76, 81, 82, 152, 153, 173) réalise au moyen d'anneaux libérables ou au moyen de sections d'anneau libérables dans les sections transversales de la construction d'une construction tubulaire, les anneaux libérables ou les sections d'anneau libérables étant adaptés à la forme tubulaire de la construction.

20. Procédé selon la revendication 19, **caractérisé par** un démontage des consoles (57, 76, 81, 82, 152, 153, 173) et anneaux ou sections d'anneau, une fois la construction achevée.

21. Procédé selon la revendication 19 ou 20, **caractérisé en ce que** les anneaux peuvent s'expanser.

22. Procédé selon la revendication 21, **caractérisé par** l'utilisation d'un ou plusieurs dispositifs de serrage rapide pour serrer les anneaux.

23. Procédé selon l'une des revendications 1 à 22, **caractérisé par** l'utilisation d'au moins deux dispositifs déplaçables pour le transport de trois outils de mesure et plus.

24. Procédé selon la revendication 23, **caractérisé par** l'utilisation d'autant de dispositifs déplaçables que d'outils de mesure.

25. Procédé selon l'une des revendications 1 à 24, **caractérisé en ce que**, lors du remesurage, la construction est à nouveau mesurée sur toute la longueur.

26. Procédé selon l'une des revendications 1 à 25, **caractérisé par** un mesurage de la construction lors de l'avancement et un mesurage ultérieur de la construction en direction inverse et par une comparaison des deux valeurs de mesure.

27. Procédé selon l'une des revendications 1 à 26, **caractérisé en ce que**, le mesurage est réalisé par des personnes de mesurage, qui se déplacent avec un véhicule d'un endroit de mesure à un autre.

28. Procédé selon l'une des revendications 1 à 27, **caractérisé par** l'utilisation d'un véhicule avec entraînement électrique, actionné par batterie, pour le transport de matériel et de personne d'endroit de mesure à endroit de mesure.

29. Procédé selon l'une des revendications 23 à 28, **caractérisé en ce que** le véhicule ou le dispositif déplaçable est sur rail ou manoeuvrable.

30. Procédé selon la revendication 29, **caractérisé en ce que** le véhicule manoeuvrable présente deux pilotages, un pilotage vers l'avant et un pilotage vers l'arrière.

31. Procédé selon la revendication 30, **caractérisé en ce que** le pilotage du véhicule peut être tourné du pilotage vers l'avant sur le pilotage vers l'arrière.

32. Procédé selon l'une des revendications 23 à 31, **caractérisé par** un pilotage par levier pour au moins deux fonctions du véhicule, de préférence pour le pilotage et la marche vers l'avant et vers l'arrière, encore de préférence pour le pilotage, marche vers l'avant et marche vers l'arrière.

33. Procédé selon l'une des revendications 23 à 32, **caractérisé en ce que** le véhicule ou le dispositif déplaçable présente un siège modifiable à l'occasion du passage de la marche vers l'avant à la marche vers l'arrière.

34. Procédé selon la revendication 33, **caractérisé en ce que** le siège peut être transformé par rabattement ou rotation.

35. Procédé selon l'une des revendications 32 à 34, **caractérisé en ce qu'**un châssis tournant porte le pilotage et/ou le siège.

36. Procédé selon l'une des revendications 23 à 35, **caractérisé en ce que** le véhicule est à trois roues ou à quatre roues et/ou le pilotage présente une barre de direction et/ou des oeillets sont mis en place au niveau du cadre du véhicule pour accrocher des harnais de levage.

37. Procédé selon l'une des revendications 1 à 36, **caractérisé en ce que** les tachymètre (30, 60, 90, 151, 178) sont réalisés parallèlement en tant qu'appareils de prisme.

38. Procédé selon l'une des revendications 1 à 37, **caractérisé en ce qu'**un tachymètre (30, 60, 90, 151, 178) et des prismes (54, 63, 91, 92, 177, 179) sont utilisés en tant qu'outils de mesure, un prisme (54, 63, 91, 92, 177, 179) étant prévu, dans la direction de mesure, devant et derrière le tachymètre (30, 60, 90, 151, 178).

39. Procédé selon l'une des revendications 1 à 38, **caractérisé en ce que** chaque outil de mesure est posé sur une console séparée (57, 76, 81, 82, 152, 53, 173) pour une étape de mesurage et tous les systèmes de mesure sauf au moins un outil de mesure de chevauchement sont démontés jusqu'à l'étape de mesurage suivante et sont réinstallés sur la console (57, 76, 81, 82, 152, 153, 173) prochainement libre dans le sens de mesure, les consoles (57, 76, 81, 82, 152, 153, 173) munies d'outils de mesure définissant l'étape de mesurage.

40. Procédé selon la revendication 39, **caractérisé en ce qu'**au moins un tachymètre (30, 60, 90, 151, 178) et un prisme (54, 63, 91, 92, 177, 179) sont utilisés en tant qu'outil de mesure.

41. Procédé selon l'une des revendications 1 à 40, **caractérisé en ce que**, pour le mesurage, des prismes (54, 63, 91, 92, 177, 179) collés dans la construction sont utilisés en plus des prismes (54, 63, 91, 92, 177, 179) maintenus avec des consoles (57, 76, 81, 82, 152, 153, 173).

42. Procédé selon l'une des revendications 1 à 41, **caractérisé en ce que** des prismes (54, 63, 91, 92, 177, 179) maintenus avec des aimants dans la construction sont utilisés en plus des prismes (54, 63, 91, 92, 177, 179) maintenus avec des consoles (57, 76, 81, 82, 152, 153, 173).

43. Procédé selon la revendication 42, **caractérisé par** l'utilisation de supports, qui sont composés tout ou partie d'un matériau réagissant aux aimants.

44. Procédé selon la revendication 43, **caractérisé par** l'utilisation de tôles en acier en tant que support.

45. Procédé selon la revendication 43 ou 44, **caractérisé par** l'utilisation de supports qui sont collés à la construction.

46. Procédé selon la revendication 45, **caractérisé par** l'utilisation d'un collage libérable du support.

47. Procédé selon l'une des revendications 42 à 46, **caractérisé par** l'utilisation de supports en tôle en acier d'une épaisseur inférieure ou égale à 0,5 mm, de préférence inférieure ou égale à 0,4 mm et de préférence encore inférieure ou égale à 0,3 mm.

48. Procédé selon l'une des revendications 42 à 47, **caractérisé par** l'utilisation de supports en tôle en acier d'une largeur inférieure ou égale à 0,3 m, de préférence inférieure ou égale à 0,2 m et de manière préférée entre toutes, inférieure ou égale à 0,1 m.

49. Procédé selon l'une des revendications 42 à 48, **caractérisé par** l'utilisation de supports en tôle en acier d'une longueur inférieure ou égale à 0,5 m, de préférence inférieure ou égale à 0,4 m et de manière préférée entre toutes, de 0,3 m.

50. Procédé selon l'une des revendications 44 à 49, **caractérisé par** la pose des tôles en acier dans le sens longitudinal de la construction.

51. Procédé selon l'une des revendications 41 à 50, **caractérisé par** l'utilisation de plusieurs prismes (54, 63, 91, 92, 177, 179) dans au moins un groupe au niveau d'un endroit de mesurage.

52. Procédé selon la revendication 51, **caractérisé par** l'utilisation de plusieurs groupes de prismes (54, 63, 91, 92, 177, 179).

53. Procédé selon l'une des revendications 41 à 52, **caractérisé par** l'utilisation de prismes (54, 63, 91, 92, 177, 179) qui sont munis au niveau du dessous d'une bande adhésive collante des deux côtés (bande adhésive double face), la bande adhésive étant appliquée avec un côté sur le dessous des prismes (54, 63, 91, 92, 177, 179), et munie de l'autre côté d'un revêtement qui est retiré avant le collage des prismes (54, 63, 91, 92, 177, 179).

54. Procédé selon l'une des revendications 41 à 52, **caractérisé par** l'utilisation de supports pour les prismes (54, 63, 91, 92, 177, 179) qui sont munis au niveau du dessous d'une bande adhésive collante des deux côtés (bande adhésive double face), la bande adhésive étant appliquée avec un côté sur le dessous du support, et munie de l'autre côté d'un revêtement qui est retiré avant le collage des prismes (54, 63, 91, 92, 177, 179).

55. Procédé selon l'une des revendications 41 à 54, **caractérisé par** l'utilisation de sections de bande adhésive ou de bande adhésive interchangeable ou de bande adhésive avec une languette de décollement.
